# EUROPEAN PATENT APPLICATION

(11) **EP 4 826 694 A1**
(43) Date of publication of application: **21.10.2026**
(21) Application number: 24920586.5
(22) Date of filing: 11.12.2024
(51) Int. Cl.: G08B 21/02, G08B 21/18, G06F 1/16, G02B 27/01, G06F 3/00, G06F 3/048, G06F 3/01, G08B 6/00, G08B 5/22

(54) **WEARABLE DEVICE AND METHOD FOR OUTPUTTING NOTIFICATION ABOUT REFERENCE BOUNDARY LINE FORMED IN EXTERNAL SPACE TO PROVIDE VIRTUAL SPACE**

(30) Priority: 25.01.2024 KR 20240011893; 15.03.2024 KR 20240036816; 02.04.2024 KR 20240044996
(71) Applicant: Samsung Electronics Co., Ltd., Suwon-si, Gyeonggi-do 16677 (KR)
(72) Inventor: YOO, Sanga, Suwon-si Gyeonggi-do 16677 (KR); PARK, Minkyu, Suwon-si Gyeonggi-do 16677 (KR); JUNG, Soojin, Suwon-si Gyeonggi-do 16677 (KR)
(74) Representative: Gulde & Partner
(86) International application number: PCT/KR2024/020270
(87) International publication number: WO 2025/159336

(57) **Abstract**

This wearable device may: configure a safety zone for a space of an external environment for a user's safety; provide a virtual space by using displays configured to be arranged toward the user's eyes; at a first position within the safety zone, while the virtual space is being provided beyond the safety zone, provide both a video of the external environment, which is being acquired using a camera, and the virtual space by using the displays in order to visually emphasize the external environment with respect to the virtual space, on the basis of identifying the wearable device that is moving out of the safety zone; and at a second position within the safety zone, while the virtual space being is provided, stop providing of the virtual space on the basis of identifying the wearable device that is moving out of the safety zone.

## Description

### Technical Field

The present disclosure relates to a wearable device and a method for outputting a notification about a reference boundary line formed in an external space to provide a virtual space.

### Background Art

In order to provide an enhanced user experience, an electronic device providing an augmented reality (AR) service for displaying information generated by a computer in association with an external object in a real world is being developed. The electronic device may be a wearable device capable of being worn by a user. For example, the electronic device may be AR glasses, and/or a head-mounted device (HMD).

The above-described information may be provided as a related art for the purpose of helping to understand the present disclosure. No claim or determination is raised as to whether any of the above-described information may be applied as a prior art related to the present disclosure.

### Disclosure

### Technical Solution

According to an embodiment, a wearable device may comprise displays configured to be positioned toward eyes of a user wearing the wearable device, at least one camera configured to be positioned toward an external environment, at least one sensor configured to obtain information with respect to the external environment, memory, comprising one or more storage mediums, storing instructions, and at least one processor comprising processing circuitry. The instructions, when executed by the at least one processor individually and/or collectively, may cause the wearable device to set a safety zone with respect to a space of the external environment for safety of the user wearing the wearable device. The instructions, when executed by the at least one processor individually and/or collectively, may cause the wearable device to provide a virtual space using the displays. The instructions, when executed by the at least one processor individually and/or collectively, may cause the wearable device to, while the virtual space is provided beyond the safety zone at a first location of the wearable device within the safety zone, based on identifying the wearable device being moved outside of the safety zone, provide, using the displays, both the virtual space and a video with respect to the external environment being obtained using the at least one camera to highlight the external environment with respect to the virtual space. The instructions, when executed by the at least one processor individually and/or collectively, may cause the wearable device to, while the virtual space is provided at a second location of the wearable device within the safety zone, based on identifying the wearable device being moved outside of the safety zone, cease to provide the virtual space.

In an embodiment, a non-transitory computer readable storage medium storing instructions may be provided. The instructions, when executed by a wearable device including displays configured to be positioned toward eyes of a user wearing the wearable device, at least one camera configured to be positioned toward an external environment, and at least one sensor configured to obtain information with respect to the external environment, cause the wearable device to set a safety zone with respect to a space of the external environment for safety of the user wearing the wearable device. The instructions, when executed by the wearable device, cause the wearable device to provide a virtual space using the displays. The instructions, when executed by the wearable device, cause the wearable device to, while the virtual space is provided beyond the safety zone at a first location of the wearable device within the safety zone, based on identifying the wearable device being moved outside of the safety zone, provide, using the displays, both the virtual space and a video with respect to the external environment being obtained using the at least one camera by increasing a transparency of the virtual space. The instructions, when executed by the wearable device, cause the wearable device to, while the virtual space is provided at a second location of the wearable device within the safety zone, based on identifying the wearable device being moved outside of the safety zone, cease to provide the virtual space.

According to an embodiment, a method of a wearable device may be provided. The wearable device may include displays configured to be positioned toward eyes of a user wearing the wearable device, at least one camera configured to be positioned toward an external environment, and at least one sensor configured to obtain information with respect to the external environment. The method may include providing, using the displays, a first portion of the virtual space, while the wearable device is located inside of a safety zone set with respect to a space of the external environment for safety of a user wearing the wearable device. The method may include, based on the wearable device being moved outside of the safety zone through a first boundary that is a portion of a boundary of the safety zone, ceasing to provide, using the displays, the virtual space and providing, using the displays, a video with respect to the external environment being obtained using the at least one camera. The method may include, based on the wearable device being moved outside of the safety zone through a second boundary that is a portion of the boundary of the safety zone and different from the first boundary, identifying a second portion of the virtual space based on a location of the wearable device located outside of the safety zone. The method may include providing, using the displays, the video with respect to the external environment and the second portion of the virtual space, based on identifying the second portion of the virtual space.

According to an embodiment, a wearable device may include displays configured to be positioned toward eyes of a user wearing the wearable device, at least one camera configured to be positioned toward an external environment, at least one sensor configured to obtain information with respect to the external environment, memory, comprising one or more storage mediums, storing instructions, and at least one processor comprising processing circuitry. The instructions, when executed by the at least one processor individually and/or collectively, may cause the wearable device to, while the wearable device is located inside of a safety zone set with respect to a space of the external environment for safety of the user wearing the wearable device, provide, using the displays, a first portion of a virtual space. The instructions, when executed by the at least one processor individually and/or collectively, may cause the wearable device to, based on the wearable device being moved outside of the safety zone through a first boundary that is a portion of a boundary of the safety zone, cease to provide, using the displays, the virtual space and provide, using the displays, a video with respect to the external environment being obtained using the at least one camera. The instructions, when executed by the at least one processor individually and/or collectively, may cause the wearable device to, based on the wearable device being moved outside of the safety zone through a second boundary that is a portion of the boundary of the safety zone and different from the first boundary, identify a second portion of the virtual space based on a location of the wearable device located outside of the safety zone. The instructions, when executed by the at least one processor individually and/or collectively, may cause the wearable device to, based on identifying the second portion of the virtual space, provide, using the displays, the video with respect to the external environment and the second portion of the virtual space.

According to an embodiment, a non-transitory computer-readable storage medium storing instructions may be provided. The instructions may be executed by a wearable device including displays configured to be positioned toward eyes of a user, at least one camera configured to be positioned toward an external environment, and at least one sensor configured to obtain information with respect to the external environment. The instructions, when executed by the wearable device, may cause the wearable device to provide, using the displays, a virtual space, while the wearable device is located inside of a safety zone set for safety of a user wearing the wearable device. The instructions, when executed by the wearable device, may cause the wearable device to, based on identifying the wearable device being moved to a boundary of the safety zone using the at least one camera and the at least one sensor, display a virtual object to change at least one of a location or a direction of the virtual space based on the safety zone. The instructions, when executed by the wearable device, may cause the wearable device to, in response to an input associated with the virtual object, change at least one of the location or the direction of the virtual space, and identify a portion of the virtual space based on a location and a direction of the wearable device in the virtual space according to the change. The instructions, when executed by the wearable device, may cause the wearable device to provide, using the displays, the identified portion of the virtual space.

According to an embodiment, a wearable device may include displays configured to be positioned toward eyes of a user wearing the wearable device, at least one camera configured to be positioned toward an external environment, at least one sensor configured to obtain information with respect to the external environment, memory, comprising one or more storage mediums, storing instructions, and at least one processor including processing circuitry. The instructions, when executed by the at least one processor individually and/or collectively, may cause the wearable device to provide, using the displays, a virtual space, while the wearable device is located inside of a safety zone set for safety of a user wearing the wearable device. The instructions, when executed by the at least one processor individually and/or collectively, may cause the wearable device to, based on identifying that the wearable device is moved toward a boundary of the safety zone using the at least one camera and the at least one sensor, display a virtual object for changing at least one of a location or a direction of the virtual space, based on the safety zone. The instructions, when executed by the at least one processor individually and/or collectively, may cause the wearable device to, in response to an input associated with the virtual object, change at least one of the location or the direction of the virtual space, and identify a portion of the virtual space based on a location and a direction of the wearable device in the virtual space according to the change. The instructions, when executed by the at least one processor individually and/or collectively, may cause the wearable device to provide, using the displays, the identified portion of the virtual space.

### Description of the Drawings

FIG. 1 illustrates exemplary screens displayed by a wearable device and based on a geographic location, according to an embodiment.
FIG. 2 illustrates a block diagram of a wearable device according to an embodiment.
FIG. 3 illustrates a flowchart of a wearable device according to an embodiment.
FIG. 4 illustrates an exemplary operation of a wearable device receiving an input for setting a safety zone set to provide a virtual space.
FIG. 5 illustrates an exemplary flowchart of an operation of a wearable device providing a virtual space.
FIG. 6 illustrates an exemplary reference area formed to determine whether a wearable device approaches a boundary of a safety zone.
FIGS. 7A, 7B, 7C, and 7D illustrate exemplary screens displayed by a wearable device to notify a boundary of a safety zone.
FIG. 8 illustrates a flowchart of a wearable device according to an embodiment.
FIGS. 9A, 9B, and 9C illustrate an exemplary operation of a wearable device detecting a movement of a user wearing the wearable device.
FIGS. 10A and 10B illustrate exemplary screens displayed by a wearable device according to a geographic location.
FIG. 11 illustrates a flowchart of a wearable device according to an embodiment.
FIGS. 12A, 12B, and 12C illustrate an exemplary operation of a wearable device changing a relationship between a geographic location of the wearable device and a virtual space.
FIGS. 13A, 13B, and 13C illustrate an exemplary operation of a wearable device changing a relationship between a geographic location of the wearable device and a virtual object.
FIG. 14A illustrates an example of a perspective view of a wearable device according to an embodiment.
FIG. 14B illustrates an example of one or more hardware disposed in a wearable device according to an embodiment.
FIGS. 15A and 15B illustrate an example of an exterior of a wearable device according to an embodiment.

### Mode for Invention

Hereinafter, various embodiments of the present document will be described with reference to the accompanying drawings.

The various embodiments of the present document and terms used herein are not intended to limit the technology described in the present document to specific embodiments, and should be understood to include various modifications, equivalents, or substitutes of the corresponding embodiment. In relation to the description of the drawings, a reference numeral may be used for a similar component. A singular expression may include a plural expression unless it is clearly meant differently in the context. In the present document, an expression such as "A or B", "at least one of A and/or B", "A, B or C", or "at least one of A, B and/or C", and the like may include all possible combinations of items listed together. Expressions such as "1st", "2nd", "first" or "second", and the like may modify the corresponding components regardless of order or importance, are only used to distinguish one component from another component, but does not limit the corresponding components. When a (e.g., first) component is referred to as "connected (functionally or communicatively)" or "accessed" to another (e.g., second) component, the component may be directly connected to the other component or may be connected through another component (e.g., a third component).

The term "module" used in the present document may include a unit configured with hardware and may be used interchangeably with terms such as component, or circuit, and the like. The module may be an integrally configured component or a minimum unit or part thereof that performs one or more functions. For example, a module may be configured with an application-specific integrated circuit (ASIC).

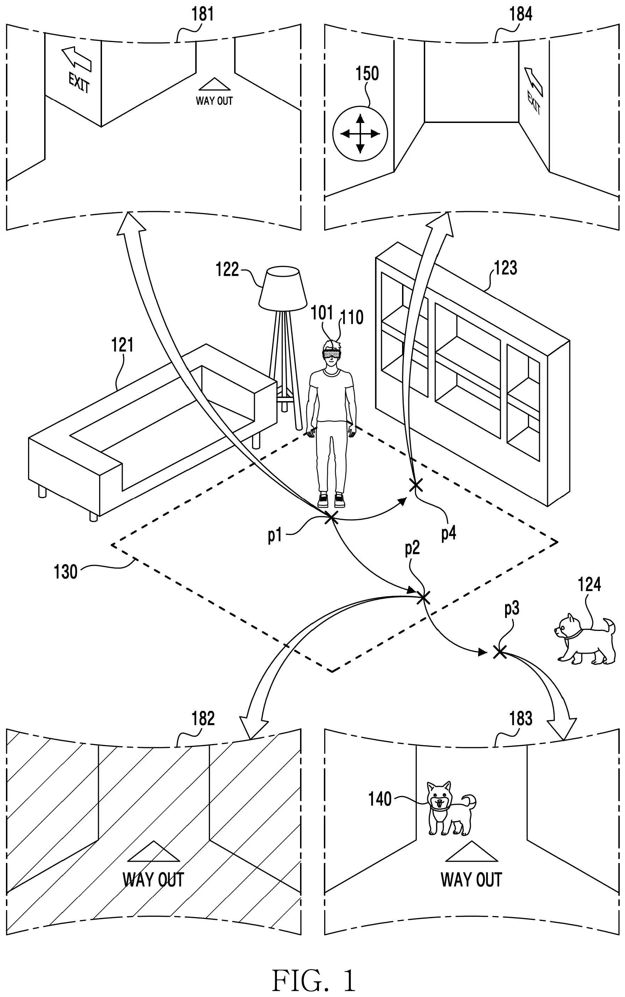

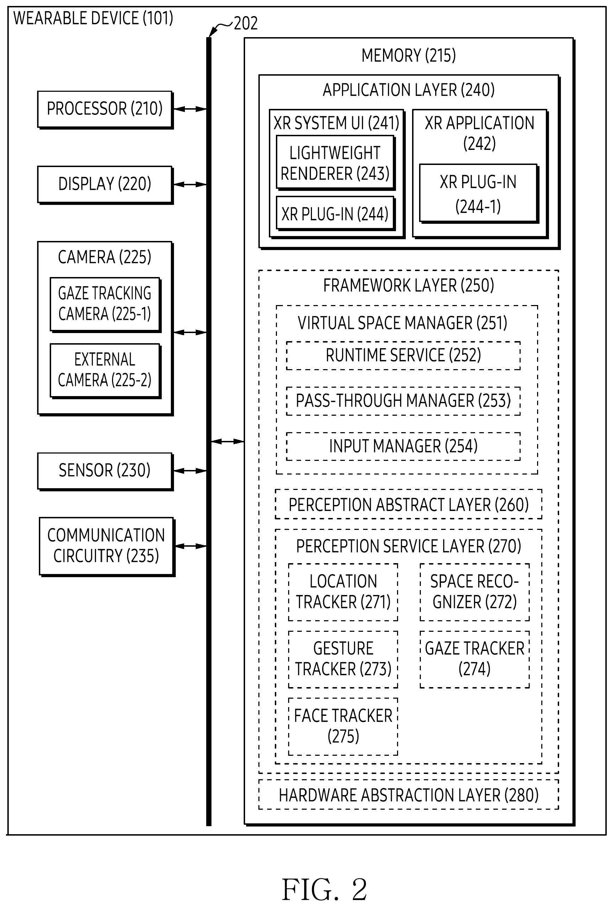

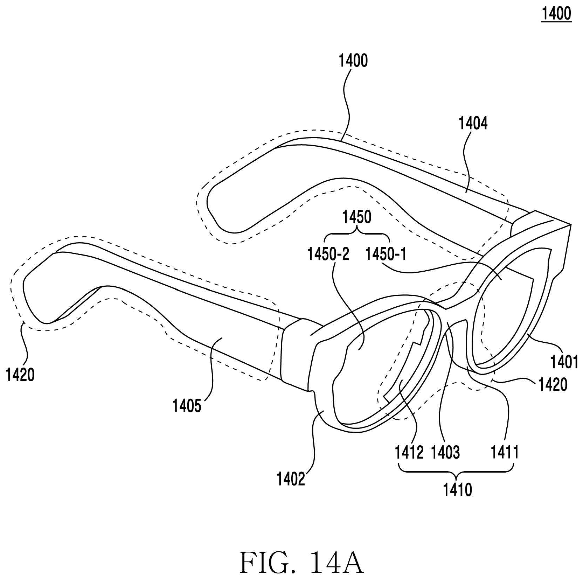

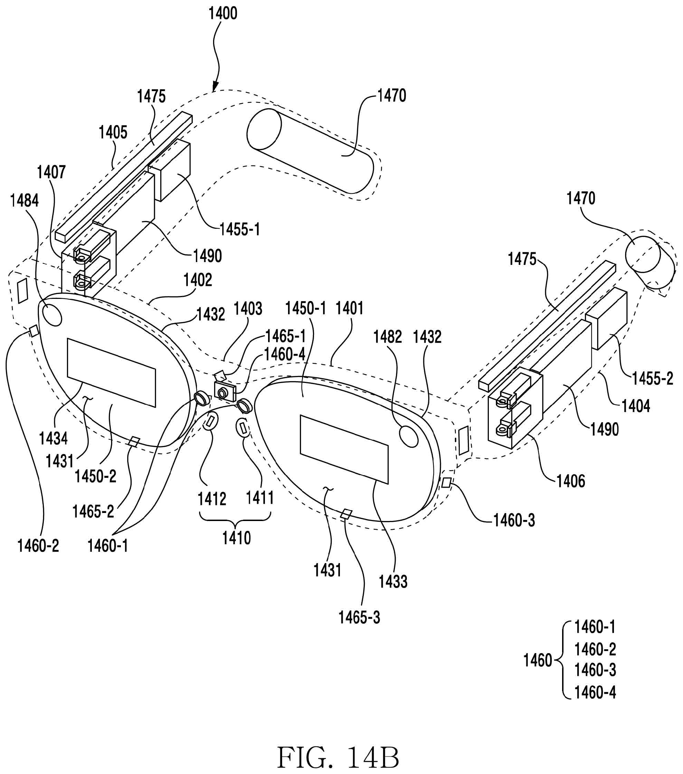

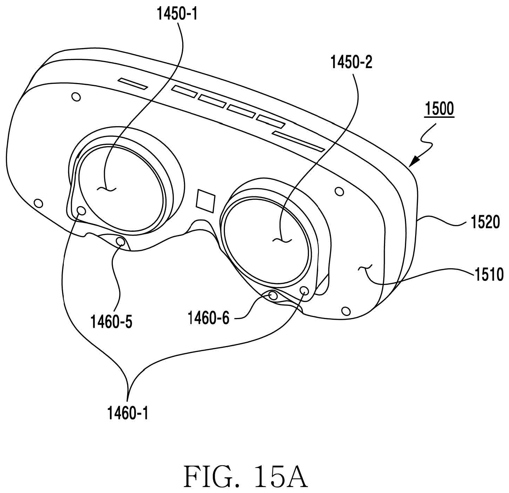

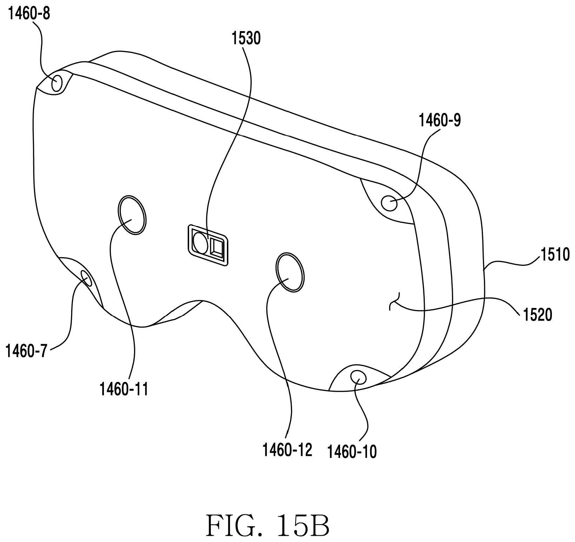

FIG. 1 illustrates exemplary screens 181, 182, 183, and 184 displayed by a wearable device 101 according to an embodiment and based on a geographic location. The wearable device 101 may include a head-mounted display (HMD) wearable on a head of a user 110. The wearable device 101 may be referred to as a head-mount display (HMD) device, a headgear electronic device, a glasses-type (or a goggle-type) electronic device, a video see-through (or visible see-through) (VST) device, an extended reality (XR) device, a virtual reality (VR) device, and/or an augmented reality (AR) device. Although an exterior of the wearable device 101 having a form of glasses is illustrated, an embodiment is not limited thereto. An example of a hardware configuration included in the wearable device 101 is exemplarily described with reference to FIG. 2. An example of a structure of the wearable device 101 wearable on the head of the user 110 is described with reference to FIGS. 14A, 14B, 15A, and/or 15B. The wearable device 101 may be referred to as an electronic device. For example, the electronic device may include an accessory (e.g., a strap) for being attached to the head of the user 110.

According to an embodiment, the wearable device 101 may execute a function associated with augmented reality (AR) and/or mixed reality (MR). For example, in a state in which the user 110 wears the wearable device 101, the wearable device 101 may include at least one lens positioned adjacent to eyes of the user 110. The wearable device 101 may combine ambient light passing through the lens with light emitted from a display of the wearable device 101. A display area of the display may be formed in the lens through which the ambient light passes. Since the wearable device 101 combines the ambient light and the light emitted from the display, the user 110 may see an image in which a real object recognized by the ambient light and a virtual object formed by the light emitted from the display are mixed. The above-described augmented reality, mixed reality, and/or virtual reality may be referred to as extended reality (XR).

According to an embodiment, the wearable device 101 may execute a function associated with video see-through (or visible see-through) (VST), pass-through, and/or virtual reality (VR). For example, in a state that the user 110 wears the wearable device 101, the wearable device 101 may include a housing covering two eyes of the user 110. The wearable device 101 may include displays (e.g., displays described with reference to FIGS. 14A, 14B, 15A, and/or 15B) configured to be positioned toward eyes of a user 110 wearing the wearable device 101. The wearable device 101 may include cameras configured to be positioned toward an external environment. The wearable device 101 may display, on the displays, an image and/or a video being obtained through cameras. For example, an image and/or a video with respect to an external environment may be displayed on the displays to provide a user experience as if the user 110 directly views the external environment.

Referring to FIG. 1, an embodiment of the wearable device 101 worn by the user 110 is illustrated. In an exemplary state of FIG. 1, the wearable device 101 may provide a virtual space to the user 110 wearing the wearable device 101, by using displays (e.g., displays positioned toward two eyes of the user 110 wearing the wearable device 101). For example, the wearable device 101 may display, on an entire display area of displays covering two eyes of the user 110, a screen (e.g., an image and/or a video) representing at least a portion of the virtual space to provide a user experience based on VR.

Referring to FIG. 1, exemplary screens 181, 182, 183, and 184 displayed on at least one display to provide a user experience based on VR are illustrated. For example, the screens 181, 182, 183, and 184 may be displayed on at least one of displays configured to be positioned toward two eyes of the user 110. For example, while the wearable device 101 is located at a location (or geographic location) p1 of an external environment, the wearable device 101 may display a screen 181 on at least one display. While providing a virtual space based on VR, the wearable device 101 may visualize, or provide, or display, through the screen 181, a view of a portion of the virtual space. The wearable device 101 may provide, to the user 110 wearing the wearable device 101, a user experience as if being separated (or disconnected) from the external environment by using the screen 181 representing a virtual space fully different from the external environment.

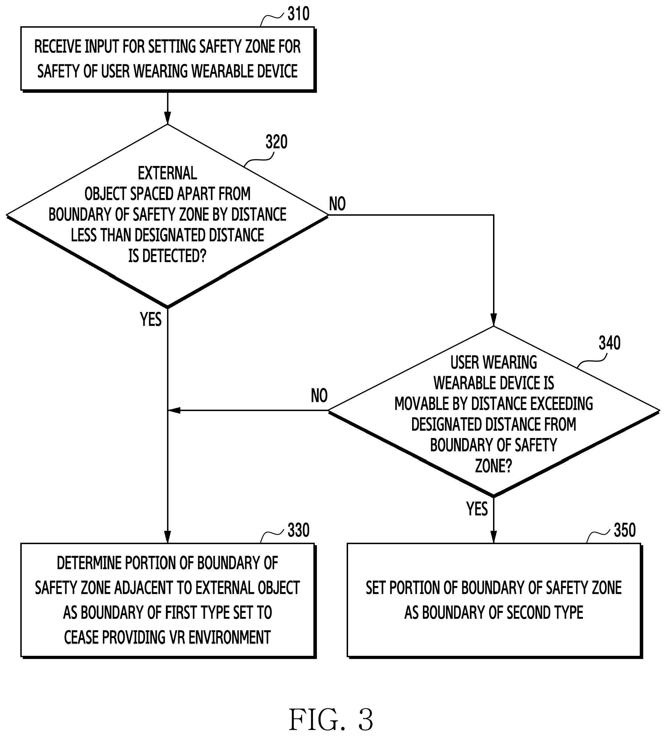

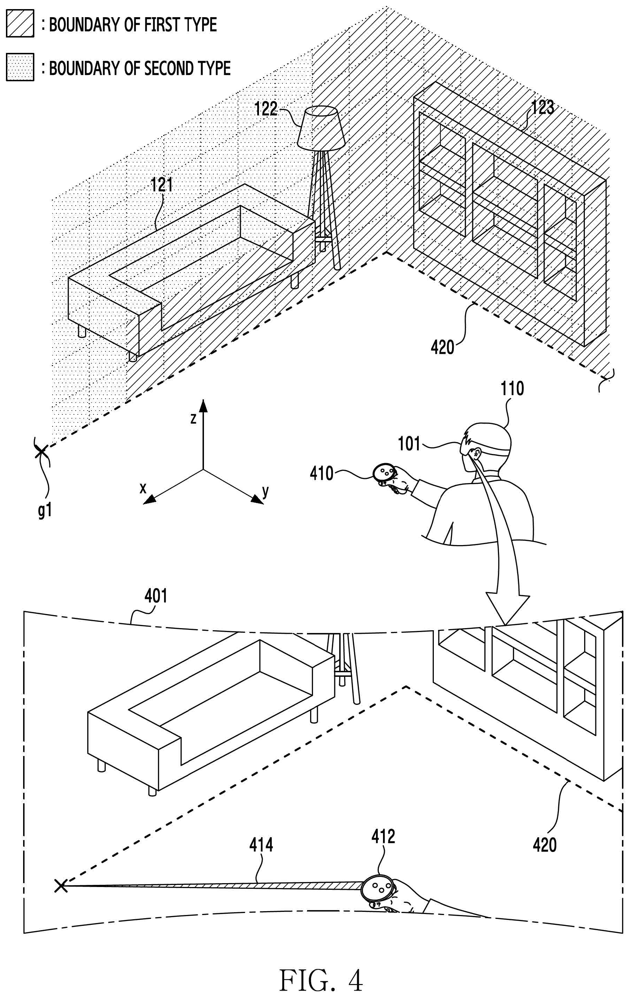

According to an embodiment, such as the screen 181, displaying an image and/or a video rendered independently of the external environment (e.g., an image and/or a video with respect to a virtual space) by the wearable device 101 may be conditionally performed within a safety zone 130 set for safety of the user 110 wearing the wearable device 101. The safety zone 130 may be referred to as a play area, a protection area, a protection zone, a geographic area, a safety zone, a safety area, a guardian area, a guardian zone, and/or a guardian. A boundary (or virtual boundary) of the safety zone 130 may be referred to as a fence and/or a wall in terms of a boundary separated from the external environment. An operation of the wearable device 101 for setting and/or generating the boundary of the safety zone 130 is described with reference to FIG. 3 and/or FIG. 4.

Referring to FIG. 1, the wearable device 101 may provide, using the displays, a first portion of a virtual space linked with the safety zone 130, while being located inside of the safety zone 130 set for safety of a user wearing the wearable device 101. When the virtual space is linked with the safety zone 130, the wearable device 101 may change a view of the virtual space displayed on the displays, according to a geographic location (e.g., a location of an inside of the safety zone 130) of the wearable device 101. For example, the wearable device 101 may change a view of the virtual space according to a movement of the wearable device 101 to provide a user experience as if the user 110 moves within the virtual space. For example, at a location p1 of the inside of the safety zone 130, the wearable device 101 may display the screen 181 representing a view of the virtual space, viewed from a location in the virtual space mapped to the location p1. When the user 110 wearing the wearable device 101 moves, the wearable device 101 may detect a change of a location of the wearable device 101.

For example, when the user 110 wearing the wearable device 101 moves from the location p1 to a location p2, the wearable device 101 may display a screen 182 representing a view of the virtual space, viewed from a location in the virtual space linked with the location p2. Similarly, when the user 110 wearing the wearable device 101 moves from the location p1 to a location p4, the wearable device 101 may display a screen 184 representing a view of the virtual space, viewed from a location in the virtual space corresponding to the location p4. Referring to the screens 182 and 184, the virtual space may be defined or provided beyond the safety zone 130. Referring to FIG. 1, while being located inside of the safety zone 130, as in locations p1, p2, and p4, the wearable device 101 may display a screen (e.g., the screens 181, 182, and 184) representing at least a portion of the virtual space. While being located inside of the safety zone 130, the wearable device 101 may provide, among an external environment and a virtual environment based on VR, the virtual environment.

The safety zone 130 may be set or defined for switching between the virtual environment and the external environment. For example, when moving from the inside of the safety zone 130 to the outside, the wearable device 101 may at least temporarily (or at least partially) cease providing the virtual environment using the displays. Referring to FIG. 1, in order to prevent a collision between an external object (e.g., a sofa 121, a lamp 122, and/or a bookshelf 123) and the user 110, the safety zone 130 may be formed in an empty space spaced apart from the external object.

Referring to exemplary screens 181, 183, and 184 displayed by the wearable device 101 located inside of the safety zone 130, a virtual space may be formed independently of an external environment (and/or the safety zone 130). For example, the virtual space represented through the screen may be represented according to dimensions (e.g., a width, a length, a height, an area, and/or a volume) different from dimensions of the safety zone 130. Referring to FIG. 1, the screen 184 displayed at the location p4 adjacent to the bookshelf 123 may include a view of the virtual space representing a movable empty space extending along the front, even though the user 110 wearing the wearable device 101 stands toward the bookshelf 123 at the location p4 adjacent to the bookshelf 123. For example, the user 110 viewing the screen 184 may continuously move toward the bookshelf 123 to move toward the empty space of the virtual space.

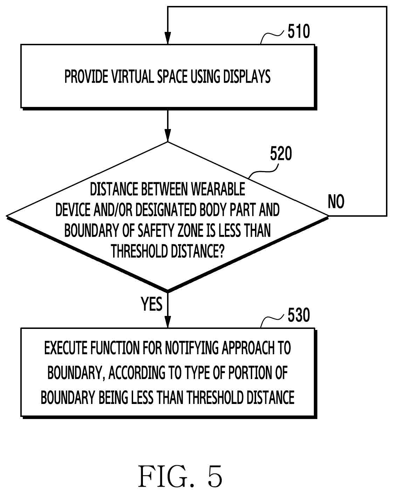

According to an embodiment, the wearable device 101 may execute a function for notifying that it is moved to the outside of the safety zone 130 to prevent the user 110 viewing the screen 184 from colliding with an external object (e.g., the bookshelf 123) outside of the safety zone 130 according to a view of a virtual space included in the screen 184. The function may be associated with a possibility of collision caused by an external object (e.g., the sofa 121, the lamp 122, and/or the bookshelf 123) located outside of the safety zone 130. For example, the wearable device 101 may display a virtual object visualizing the possibility of collision, based on a location of the wearable device 101 approaching a boundary of the safety zone 130. For example, the wearable device 101 may output the possibility of collision, through a haptic actuator configured to output vibration and/or a speaker configured to output sound. For example, the wearable device 101 may provide, to the user 110, a view of the external environment adjacent to the user 110 together with a view of the virtual space, by displaying a video being obtained through a camera. An exemplary operation of the wearable device 101 executing the function for notifying that it is moved to the outside of the safety zone 130 is described with reference to FIG. 5, FIG. 6, and FIGS. 7A to 7D.

According to an embodiment, a boundary of the safety zone 130 may include a first boundary set to cease providing a virtual space. Based on detecting the wearable device 101 being moved to the outside of the safety zone 130 through the first boundary, the wearable device 101 may refrain from providing, using the displays, at least a portion of the virtual space. Based on detecting the wearable device 101 being moved to the outside of the safety zone 130 through the first boundary, the wearable device 101 may provide, by using the displays, a video being obtained using at least one camera. For example, the wearable device 101 may display an image and/or a video with respect to the external environment, by switching to a pass-through mode (or a VST mode). In a case of identifying a location of the wearable device 101 being moved to the outside of the safety zone 130 through the first boundary, the wearable device 101 may switch from a mode providing a virtual space through an entire display area of the displays (e.g., a VR mode) to the pass-through mode.

In an embodiment, a boundary of the safety zone 130 may include a second boundary set to conditionally maintain providing a virtual space. The second boundary may not overlap the first boundary and may be a remaining boundary of the safety zone 130 different from the first boundary. Based on detecting the wearable device 101 being moved to the outside of the safety zone 130 through the second boundary, the wearable device 101 may identify a second portion of a virtual space, connected with a first portion of the virtual space linked with the safety zone 130. Referring to FIG. 1, in a case of being located at a location p3 outside the safety zone 130, the wearable device 101 may identify a second portion (e.g., a portion linked with the location p3) of the virtual space linked with the location p3 of the wearable device 101. Based on identifying the second portion, the wearable device 101 may provide, using the displays, the second portion. The wearable device 101 may provide a video (e.g., a video being obtained through at least one camera) mixed by using a designated transparency, together with the second portion.

Referring to FIG. 1, an exemplary screen 183 displayed by the wearable device 101 located at the location p3 outside the safety zone 130 is illustrated. The screen 183 may include a view of the virtual space viewed from a location in a virtual space corresponding to the location p3. In the screen 183, an image and/or a video representing a virtual space may be mixed with an image and/or a video representing an external environment, according to a designated transparency. For example, the wearable device 101 may display, on the displays, a first video of the virtual space based on a first transparency and a second video of a camera based on a second transparency. As a non-limiting example, the first video may be superimposed on the second video.

Referring to the exemplary screen 183 of FIG. 1, since the wearable device 101 located at the location p3 provides a video with respect to an external environment together with a virtual space, the user 110 wearing the wearable device 101 may simultaneously see a view of the virtual space and a view of the external environment. For example, the wearable device 101 may display, on the displays, a video representing an external object located at the front of the wearable device 101, such as a dog 124. For example, a visual object 140 representing the dog 124 included in the video may be included in the screen 183. The wearable device 101 may provide a view of the virtual space viewed from a location of the virtual space linked with the location p3, together with the visual object 140 representing an external object of the external environment.

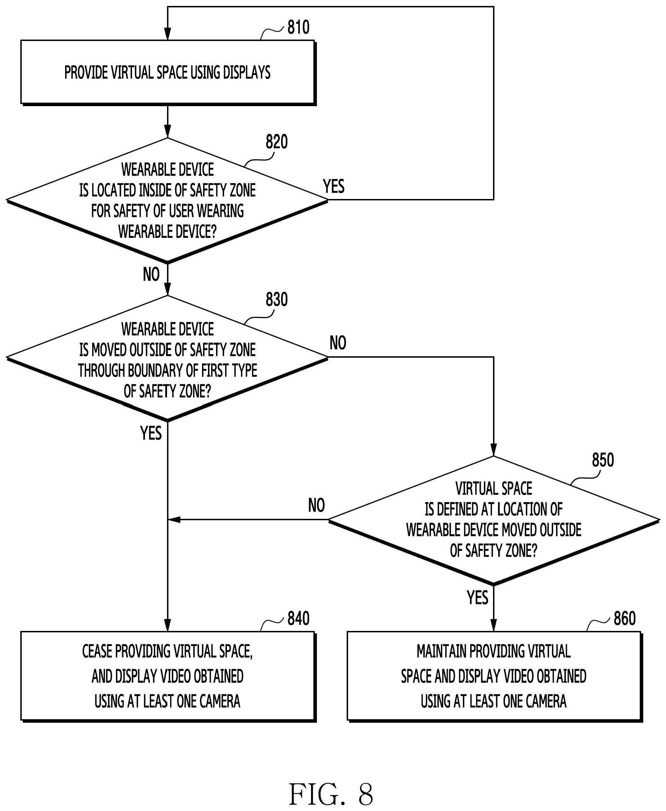

For example, when moving from the safety zone 130 to a movable external environment, the wearable device 101 may maintain providing a user experience based on the virtual space, by providing an image and/or a video with respect to the external environment together with the virtual space, instead of ceasing to provide the virtual space. While maintaining the user experience based on the virtual space, the wearable device 101 may provide, to the user 110, information with respect to the external environment by using the image and/or the video with respect to the external environment. An operation of the wearable device 101 for maintaining, in the external environment, the user experience based on the virtual space is described with reference to FIG. 8, FIGS. 9A, 9B, and 9C, FIG. 10A, and/or FIG. 10B.

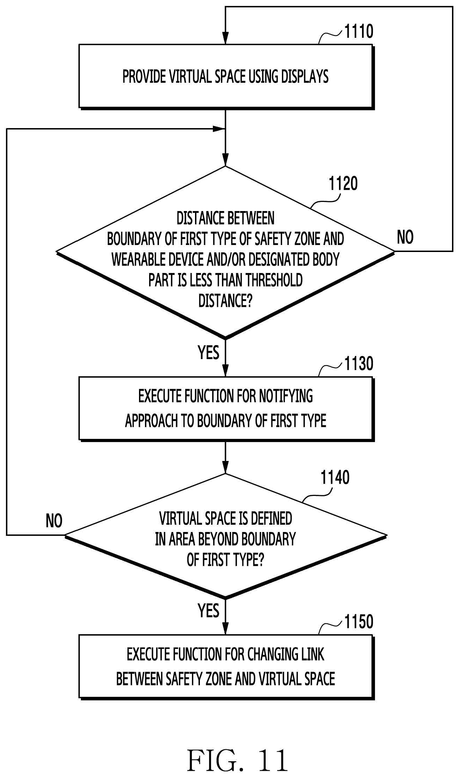

In an embodiment, a boundary of the safety zone 130 adjacent to the bookshelf 123 may be a first boundary set to cease providing a virtual space. At a location p4 adjacent to the first boundary, the wearable device 101 may display, together with a notification associated with the first boundary, a virtual object 150 for changing an attribute (e.g., a placement location, a placement direction, a coordinate system, a direction, and/or a relationship with the safety zone 130) of the virtual space. For example, while displaying a screen 184 representing a movable empty space extending along the front, the wearable device 101 may change, based on receiving an input associated with the virtual object 150, the attribute of the virtual space such that the empty space extends in a direction different from a direction facing the bookshelf 123. The wearable device 101 may provide, using the displays, a virtual space based on the changed attribute. An operation of the wearable device 101 based on the input associated with the virtual object 150 is described with reference to FIG. 11, FIGS. 12A, 12B, and 12C, and FIGS. 13A, 13B, and 13C.

As described above, according to an embodiment, the wearable device 101 may provide a virtual space for VR while being located inside of the safety zone 130. When moving toward a boundary of the safety zone 130, the wearable device 101 may execute a function for notifying moving toward the boundary. The function may be executed differently according to a distance between the boundary and an external object. The wearable device 101 may classify the boundary of the safety zone 130 into a first boundary for directly ceasing providing a virtual space and a second boundary for conditionally maintaining providing a virtual space. When the wearable device 101 is moved outside of the safety zone 130 through the first boundary, the wearable device 101 may cease providing a virtual space. When the wearable device 101 is moved outside of the safety zone 130 through the second boundary, the wearable device 101 may display a video with respect to an external environment superimposed on the virtual space, as in the screen 183.

Hereinafter, an exemplary hardware configuration of the wearable device 101 of FIG. 1 is described with reference to FIG. 2.

FIG. 2 illustrates a block diagram of a wearable device 101 according to an embodiment. The wearable device 101 of FIG. 2 may include the wearable device 101 of FIG. 1.

Referring to FIG. 2, the wearable device 101 according to an embodiment may include a processor 210, memory 215, a display 220, a camera 225 (e.g., a gaze tracking camera 225-1, an external camera 225-2), a sensor 230, communication circuitry 235, or a combination thereof. The processor 210, the memory 215, the display 220, the camera 225, the sensor 230, and the communication circuitry 235 may be electrically and/or operably connected to each other by an electronic component such as a communication bus 202. In the present disclosure, an operative connection of electronic components may include a direct connection established between the electronic components and/or an indirect connection established between the electronic components such that a first electronic component among the electronic components is controlled by a second electronic component among the electronic components. The type and/or the number of electronic components included in the wearable device 101 is not limited to those illustrated in FIG. 2. For example, the wearable device 101 may include only a portion of electronic components illustrated in FIG. 2.

According to an embodiment, the processor 210 of the wearable device 101 may include circuitry (e.g., processing circuitry) for processing data based on instructions. The processor 210 may include a central processing unit (CPU), a graphic processing unit (GPU), and/or a neural processing unit (NPU). The processor 210 may be referred to as an application processor (AP). The wearable device 101 including the processor 210 may include cases in which the wearable device 101 includes at least one processor, the wearable device 101 includes a plurality of processors, and/or the wearable device 101 includes a single processor. The processor 210 may have a structure of a multi-core processor such as a dual core, a quad core, a hexa core, and/or an octa core. A multi-core processor structure of the processor 210 may include a structure (e.g., a big-little structure) having different core circuits distinguished by power consumption, a clock, and/or computational amount per unit time. At least one processor included in the wearable device 101 may perform individually and/or collectively operations and/or functions of the present disclosure.

According to an embodiment, the memory 215 of the wearable device 101 may include an electronic component (or a storage medium) for storing data and/or instructions inputted to the processor 210 and/or outputted from the processor 210. The memory 215 may include, for example, a volatile memory such as a random-access memory (RAM) and/or a non-volatile memory such as a read-only memory (ROM). The volatile memory may include, for example, at least one of a dynamic RAM (DRAM), a static RAM (SRAM), a cache RAM, or a pseudo SRAM (PSRAM). The non-volatile memory may include, for example, at least one of a programmable ROM (PROM), an erasable PROM (EPROM), an electrically erasable PROM (EEPROM), a flash memory, a hard disk, a compact disk, or an embedded multi media card (eMMC). In an embodiment, the memory 215 may be referred to as a storage.

In an embodiment, the display 220 of the wearable device 101 may be configured to visualize information (or a signal) provided from the processor 210. The display 220 may include a flexible display, a flat panel display (FPD), and/or an electronic paper. The display 220 may include a liquid crystal display (LCD), a plasma display panel (PDP), and/or a plurality of light emitting diodes (LEDs). The LED of the display 220 may be implemented as organic LED (OLED). An embodiment is not limited thereto, and for example, when the wearable device 101 includes a lens for transmitting external light (or ambient light), the display 220 may include a projector (or a projection assembly) for projecting light onto the lens. In an embodiment, the display 220 may be referred to as a display panel and/or a display module. When worn by a user (e.g., the user 110 of FIG. 1) of the wearable device 101, pixels included in the display 220 may be disposed toward any one of two eyes of the user. For example, the display 220 may include display areas (or active areas) corresponding to each of two eyes of the user.

In an embodiment, the camera 225 of the wearable device 101 may include an optical sensor (e.g., a charged coupled device (CCD) sensor, a complementary metal oxide semiconductor (CMOS) sensor) generating an electrical signal indicating a color and/or a brightness of light. The camera 225 may be referred to as an image sensor and may be included in the sensor 230 of FIG. 2. A plurality of optical sensors included in the camera 225 may be arranged in a form of a 2-dimensional array. The camera 225 may generate 2-dimensional frame data corresponding to light reaching optical sensors of the 2-dimensional array by obtaining substantially simultaneously electrical signals of each of the plurality of optical sensors. For example, data on a photo captured using the camera 225 may indicate a 2-dimensional frame data obtained from the camera 225. For example, data on a video captured using the camera 225 may indicate a sequence of a plurality of 2-dimensional frame data obtained from the camera 225, according to a frame rate.

According to an embodiment, the wearable device 101 may include, as an example of the camera 225, a plurality of cameras disposed toward different directions. The plurality of cameras may include a gaze tracking camera 225-1 configured to be arranged toward eyes of a user wearing the wearable device 101. The plurality of cameras may include an external camera 225-2 configured to be disposed toward an external environment, when worn by the user of the wearable device 101. The processor 210 may identify a direction of a gaze of the user by using an image and/or a video obtained from the gaze tracking camera 225-1. The gaze tracking camera may include an infrared (IR) sensor. The gaze tracking camera may be referred to as a gaze sensor and/or a gaze tracker.

For example, the processor 210 may identify an external object by using an image and/or a video obtained from the external camera 225-2. For example, the processor 210 may identify a position, a shape, and/or a gesture (e.g., a hand gesture) of a hand of a user wearing the wearable device 101, based on an image and/or a video obtained from the external camera 225-2. Using an image and/or a video with respect to an external environment obtained from the external camera 225-2, the processor 210 may recognize and/or track one or more objects in the external environment.

According to an embodiment, the sensor 230 of the wearable device 101 may generate, from non-electronic information associated with the wearable device 101, electric information that may be processed and/or stored by the processor 210 and/or the memory 215 of the wearable device 101. The information may be referred to as sensor data. The sensor 230 may include a global positioning system (GPS) sensor for detecting a geographic location of the wearable device 101, an image sensor (e.g., the camera 225), an audio sensor (e.g., a microphone and/or a microphone array including a plurality of microphones), an illuminance sensor, an inertial measurement unit (IMU) (e.g., an acceleration sensor, a gyro sensor, and/or a geomagnetic sensor), a light detection and ranging (LiDAR) sensor, and/or a time-of-flight (ToF) sensor (or a ToF camera). The wearable device 101 may include a sensor configured to detect a distance between the wearable device 101 and an external object, such as the ToF sensor. The sensor for detecting a distance between the wearable device 101 and an external object may be referred to as a depth sensor.

In an embodiment, the depth sensor included in the wearable device 101 may include a ToF sensor and/or a structured light (SL) sensor. The SL sensor may be referred to as a SL camera. The ToF sensor may be referred to as a ToF camera. The SL sensor may emit or output a light pattern (e.g., a plurality of dots) of a specific wavelength (e.g., an infrared wavelength). When an external object reflects the light pattern, the light pattern may be distorted by embossing of a surface of the external object. By detecting reflected light with respect to the light pattern, the SL sensor and/or the processor 210 connected to the SL sensor may recognize the distortion. Using the distortion, the processor 210 may calculate a distance between the wearable device 101 and the external object. The ToF sensor may emit light of a specific wavelength (e.g., an infrared wavelength) in a unit of nanoseconds. The ToF sensor may measure a time during which light reflected by the external object is propagated to the ToF sensor. Using the measured time, the ToF sensor and/or the processor 210 may calculate or determine a distance between the external object and the wearable device 101. Information calculated by using the ToF sensor and/or the SL sensor may be referred to as a depth map.

In an embodiment, the communication circuitry 235 of the wearable device 101 may include a circuit for supporting transmission and/or reception of a signal between the wearable device 101 and an external electronic device. The communication circuitry 235 may include, for example, at least one of a MODEM, an antenna, or an optic/electronic (O/E) converter. The communication circuitry 235 may support transmission and/or reception of information based on various protocols such as ethernet, local area network (LAN), wide area network (WAN), wireless fidelity (Wi-Fi), Bluetooth, bluetooth low energy (BLE), ZigBee, long term evolution (LTE), 5G new radio (NR), 6G, and/or above-6G. In an embodiment, the communication circuitry 235 may be referred to as a communication processor and/or a communication module.

In the memory 215 of the wearable device 101 according to an embodiment, instructions (or commands) to be inputted to the processor 210 may be stored. The instructions may include a binary code indicating a function, an operation, and/or an action to be executed by the processor 210. A set of instructions may include a program, firmware, a library, an operating system, a process, a routine, a subroutine, and/or a software application (hereinafter, an application). For example, when executing the instructions, the wearable device 101 and/or the processor 210 may perform at least one of operations of FIG. 3, FIG. 5, FIG. 8, and/or FIG. 11. Hereinafter, the software application being installed in the wearable device 101 may indicate that instructions provided in a form of a software application (or a package) are stored in the memory 215 and that the software application is stored in an executable format by the processor 210 (e.g., a file having an extension designated by an operating system of the wearable device 101).

Referring to FIG. 2, programs installed in the wearable device 101 may be included in any one of different layers including an application layer 240, a framework layer 250, and/or a hardware abstraction layer (HAL) 280, based on a target. For example, programs (e.g., module or driver) designed to target a hardware (e.g., the display 220, the camera 225, the sensor 230, and/or the communication circuitry 235) of the wearable device 101 may be included in the hardware abstraction layer 280. In terms of including one or more programs for providing an extended reality (XR) service, the framework layer 250 may be referred to as an XR framework layer. For example, the layers illustrated in FIG. 2, which are logically separated (or separated for convenience of explanation), may not mean that an address space of the memory 215 is separated by the layers.

For example, programs (e.g., a location tracker 271, a space recognizer 272, a gesture tracker 273, a gaze tracker 274, and/or a face tracker 275) designed to target at least one of the hardware abstraction layer 280 and/or the application layer 240 may be included in the framework layer 250. The programs included in the framework layer 250 may provide an application programming interface (API) capable of being executed (or invoked (or called)) based on another program.

For example, a program designed to target a user of the wearable device 101 may be included in the application layer 240. An extended reality (XR) system user interface (UI) 241 and/or an XR application 242 are illustrated as an example of programs included in the application layer 240, but the embodiment is not limited thereto. For example, the programs (e.g., software application) included in the application layer 240 may cause execution of a function supported by programs included in the framework layer 250, by calling the API.

For example, the wearable device 101 may display, on the display 220, one or more visual objects for performing interaction with a user, based on execution of the XR system UI 241. The visual object may mean an object capable of being positioned within a screen for transmission of information and/or interaction with a user, such as a text, an image, an icon, a video, a button, a check box, a radio button, a text box, a slider and/or a table. The visual object may be referred to as a visual guide, a virtual object, a visual element, a UI element, a view object, and/or a view element. The wearable device 101 may provide, to a user, functions available in a virtual space based on the execution of the XR system UI 241.

Referring to FIG. 2, it is illustrated that the XR system UI 241 includes a lightweight renderer 243 and/or an XR plug-in 244, but is not limited thereto. For example, the processor 210 may execute a lightweight renderer 243 and/or an XR plug-in 244 in the framework layer 250, based on the XR system UI 241.

For example, the wearable device 101 may obtain a resource (e.g., API, system process, and/or library) used to define, generate, and/or execute a rendering pipeline in which a partial change is allowed, based on the execution of the lightweight renderer 243. The lightweight renderer 243 may be referred to as a lightweight renderer pipeline, in terms of defining a rendering pipeline in which a partial change is allowed. The lightweight renderer 243 may include a renderer (e.g., a prebuilt renderer) built before execution of a software application. For example, the wearable device 101 may obtain a resource (e.g., API, system process, and/or library) used to define, generate, and/or execute the entire rendering pipeline, based on the execution of the XR plug-in 244. The XR plug-in 244 may be referred to as an open XR native client, in terms of defining (or setting) the entire rendering pipeline.

For example, the wearable device 101 may display, on the display 220, a screen representing at least a portion of a virtual space, based on the execution of the XR application 242. The XR plug-in 244-1 included in the XR application 242 may include instructions supporting a function similar to the XR plug-in 244 of the XR system UI 241. Among descriptions of the XR plug-in 244-1, a description overlapping those of the XR plug-in 244 may be omitted. The wearable device 101 may cause execution of a virtual space manager 251, based on execution of the XR application 242.

According to an embodiment, the wearable device 101 may provide a virtual space service, based on the execution of the virtual space manager 251. For example, the virtual space manager 251 may include a platform for supporting the virtual space service. Based on the execution of the virtual space manager 251, the wearable device 101 may identify a virtual space formed based on a user's location indicated by data obtained through the sensor 230, and may display at least a portion of the virtual space on the display 220. The virtual space manager 251 may be referred to as a composition presentation manager (CPM).

For example, the virtual space manager 251 may include a runtime service 252. As an example, the runtime service 252 may be referred to as an OpenXR runtime module (or OpenXR runtime program). The wearable device 101 may execute at least one of a user's pose prediction function, a frame timing function, and/or a space input function, based on the execution of the runtime service 252. As an example, the wearable device 101 may perform rendering for a virtual space service to a user, based on the execution of the runtime service 252. For example, a function associated with a virtual space executable by the application layer 240 may be supported based on the execution of runtime service 252.

For example, the virtual space manager 251 may include a pass-through manager 253. Based on the execution of the pass-through manager 253, the wearable device 101 may overlappingly display, while displaying a screen representing a virtual space on display 220, an image and/or a video representing an actual space obtained through an external camera 225-2 on at least a portion of the screen.

For example, the virtual space manager 251 may include an input manager 254. The wearable device 101 may identify data (e.g., sensor data) obtained by executing one or more programs included in a perception service layer 270, based on the execution of the input manager 254. The wearable device 101 may identify a user input associated with the wearable device 101, by using the obtained data. The user input may be associated with the user's motion (e.g., hand gesture), gaze, and/or speech identified by the sensor 230 and/or the camera 225 (e.g., the external camera 225-2). The user input may be identified based on an external electronic device connected (or paired) through the communication circuitry 235.

For example, a perception abstract layer 260 may be used for data exchange between the virtual space manager 251 and the perception service layer 270. In terms of being used for data exchange between the virtual space manager 251 and the perception service layer 270, the perception abstract layer 260 may be referred to as an interface. As an example, the perception abstraction layer 260 may be referred to as OpenPX. The perception abstraction layer 260 may be used for a perception client and a perception service.

According to an embodiment, the perception service layer 270 may include one or more programs for processing data obtained from the sensor 230 and/or the camera 225. One or more programs may include at least one of the location tracker 271, the space recognizer 272, the gesture tracker 273, and/or the gaze tracker 274. The type and/or number of one or more programs included in the perception service layer 270 is not limited as illustrated in FIG. 2.

For example, the wearable device 101 may identify a posture of the wearable device 101 by using the sensor 230, based on the execution of the location tracker 271. The wearable device 101 may identify 6 degrees of freedom pose (6 dof pose) of the wearable device 101 by using data obtained using the external camera 225-2 and/or an IMU (e.g., gyro sensor, acceleration sensor and/or geomagnetic sensor), based on the execution of the location tracker 271. The location tracker 271 may be referred to as a head tracking (HeT) module (or a head tracker or head tracking program).

For example, the wearable device 101 may obtain information for providing a three-dimensional virtual space corresponding to a surrounding environment (e.g., external space) of the wearable device 101 (or a user of the wearable device 101), based on the execution of the space recognizer 272. The wearable device 101 may reproduce the surrounding environment of the wearable device 101 in three dimensions, by using data obtained using an external camera (e.g., the camera 225), based on the execution of the space recognizer 272. The wearable device 101 may identify at least one of a plane, an inclination, and a step, based on the surrounding environment of the wearable device 101 reproduced in three dimensions based on the execution of the space recognizer 272. The space recognizer 272 may be referred to as a scene understanding (SU) module (or a scene recognition program).

For example, the wearable device 101 may identify (or recognize) a hand's pose and/or gesture of the user of the wearable device 101 based on the execution of the gesture tracker 273. For example, the wearable device 101 may identify a pose and/or a gesture of the user's hand by using data obtained from an external camera (e.g., the camera 225), based on the execution of the gesture tracker 273. As an example, the wearable device 101 may identify a pose and/or a gesture of the user's hand, based on data (or image) obtained using an external camera based on the execution of the gesture tracker 273. The gesture tracker 273 may be referred to as a hand tracking (HaT) module (or a hand tracking program) and/or a gesture tracking module.

For example, the wearable device 101 may identify (or track) eye movement of the user of the wearable device 101, based on the execution of the gaze tracker 274. For example, the wearable device 101 may identify the eye movement of the user, by using data obtained from a gaze tracking camera (e.g., image sensor) based on the execution of the gaze tracker 274. The gaze tracker 274 may be referred to as an eye tracking (ET) module (or eye tracking program) and/or a gaze tracking module.

For example, the perception service layer 270 of the wearable device 101 may further include the face tracker 275 for tracking the user's face. For example, the wearable device 101 may identify (or track) movement of the user's face and/or the user's facial expression, based on the execution of the face tracker 275. The wearable device 101 may estimate the user's facial expression, based on the movement of the user's face based on the execution of the face tracker 275. For example, the wearable device 101 may identify the movement of the user's face and/or the user's facial expression, based on data (e.g., image and/or video) obtained using the camera 225 (e.g., a camera facing at least a portion of the user's face), based on the execution of the face tracker 275.

In an embodiment, the processor 210 may obtain information with respect to an external environment using the camera 225 and/or the sensor 230. The information may indicate a geographic location of the wearable device 101. For example, the information may include a GPS coordinate of the wearable device 101. The wearable device 101 may check whether the wearable device 101 is moved beyond a safety zone, by comparing a safety zone (e.g., the safety zone 130 of FIG. 1) and the geographic location of the wearable device 101. For example, the wearable device 101 may check a boundary of the safety zone through which the wearable device 101 passes, at a time point at which the wearable device 101 is moved beyond the safety zone. When the wearable device 101 is moved outside of the safety zone, the wearable device 101 may display, on at least a portion of the display 220, an image and/or a video obtained from the camera 225 and representing a view of the external environment.

For example, a safety zone set to provide a virtual space may be spaced apart from an obstacle that interferes with a movement of a user in the external environment. At a first boundary of the safety zone adjacent to the obstacle, the wearable device 101 may output a relatively high level of warning to prevent a collision between a user wearing the wearable device 101 and the obstacle (or an accident caused by the collision). At a second boundary of the safety zone spaced apart from the obstacle, the wearable device 101 may output a relatively low level of warning to a user wearing the wearable device 101. At the second boundary and/or beyond the second boundary, in order to support an interaction between the external environment and the user, the wearable device 101 may display, on the display 220, an image and/or a video being obtained through the camera 225. The image and/or the video being obtained through the camera 225 may be provided based on a partial pass-through mode.

For example, a warning outputted at a boundary of the safety zone may be associated with a characteristic of an external environment beyond the boundary. At the boundary of the safety zone and/or beyond the boundary, the wearable device 101 may determine or change an attribute (e.g., a width, a height, a position within a display area, and/or a size of an image and/or a video, displayed for pass-through and being obtained from the external camera 225-2) of a pass-through mode, according to a form of a virtual space.

Hereinafter, an exemplary operation of the wearable device 101 and/or the processor 210 for setting a safety zone is described with reference to FIG. 3.

FIG. 3 illustrates a flowchart of a wearable device according to an embodiment. The wearable device 101 of FIG. 1 and/or FIG. 2, and/or the processor 210 of FIG. 2 may perform an operation of the wearable device described with reference to FIG. 3. An operation of FIG. 3 may be performed based on a wearable device executing a program (e.g., the pass-through manager 253) described with reference to FIG. 2. An order in which operations of FIG. 3 are performed is not limited to an order illustrated in FIG. 3. For example, a processor of the wearable device may perform operations of FIG. 3 in an order different from the order illustrated in FIG. 3. For example, the processor of the wearable device may perform at least two operations among operations of FIG. 3 substantially simultaneously.

Referring to FIG. 3, in operation 310, a processor of a wearable device according an embodiment may receive an input for setting a safety zone (e.g., the safety zone 130 of FIG. 1) for safety of a user (e.g., the user 110 of FIG. 1) wearing the wearable device. The input may be identified or detected, based on a signal received from an external electronic device (e.g., a remote controller wirelessly connected through the communication circuitry 235 of FIG. 2) connected to the wearable device. The input may be identified or detected using data of a camera (e.g., the gaze tracking camera 225-1 of FIG. 2) and/or a sensor (e.g., the sensor 230 of FIG. 2) of the wearable device. For example, the processor may detect or receive the input of operation 310, by using a gaze position of the user wearing the wearable device recognized through the gaze tracking camera. For example, the processor may detect or receive the input of operation 310 using a hand gesture recognized through an external camera (e.g., the external camera 225-2 of FIG. 2).

Referring to FIG. 3, in operation 320, the processor of the wearable device according to an embodiment may determine (or identify) whether an external object spaced apart from a boundary of the safety zone by a distance less than a designated distance is detected. When detecting an external object spaced apart from the boundary of the safety zone by less than the designated distance (320-Yes), the processor may perform operation 330. When detecting an external object spaced apart from the boundary of the safety zone by greater than or equal to the designated distance, or when not detecting any external object (320-No), the processor may perform operation 340. The designated distance of operation 320 may be empirically determined such that, when being moved outside of the safety zone, the external object does not collide or contact with a user wearing the wearable device, before switching from a VR mode to a pass-through mode is completed. The designated distance of operation 320 may be predetermined by a program (e.g., an operating system and/or a software application) executed by the wearable device.

Referring to FIG. 3, in operation 330, the processor of the wearable device according to an embodiment may determine a portion of the boundary of the safety zone adjacent to the external object as a boundary of a first type set to cease providing a VR environment. In an external space within a designated distance from the boundary of the first type, an external object capable of colliding with a user may be located. The processor identifying the boundary of the first type may store a result of identifying the boundary of the first type in memory (e.g., the memory 215 of FIG. 2).

Referring to FIG. 3, in operation 340, the processor of the wearable device according to an embodiment may check or determine whether a user wearing the wearable device is movable by a distance exceeding a designated distance from the boundary of the safety zone. For example, the processor may detect or check an empty space beyond the boundary (e.g., a space having a width and/or a height exceeding the designated distance). When the user wearing the wearable device is movable by a distance exceeding the designated distance from the boundary of the safety zone (340-Yes), the processor may perform operation 350. When the user wearing the wearable device is movable by a distance less than or equal to the designated distance from the boundary of the safety zone (340-No), the processor may perform operation 340.

Referring to FIG. 3, in operation 350, the processor of the wearable device according to an embodiment may set a portion of the boundary of the safety zone as a boundary of a second type. The boundary of the second type may be a remaining portion of the boundary of the safety zone different from the boundary of the first type. The boundary of the second type may be set to at least temporarily maintain providing a virtual space. The boundary of the second type may be set to visualize information with respect to an external environment while maintaining a user experience based on a virtual space beyond the boundary. In an external space within a designated distance from the boundary of the second type, any external object capable of colliding with a user may not exist. The processor identifying the boundary of the second type may store a result of identifying the boundary of the second type in the memory.

Referring to FIG. 3, after receiving an input of operation 310, a boundary of the safety zone indicated by the input may be classified into the boundary of the first type and the boundary of the second type. Information indicating segments of the classified boundary and types corresponding to each of the segments may be stored in the memory of the wearable device. Based on detecting a location of the wearable device being moved toward the boundary, the processor may display a UI for notifying movement of the wearable device toward the boundary, according to a type of the boundary indicated by the information.

Hereinafter, an exemplary operation of the wearable device receiving the input of operation 310 is described with reference to FIG. 4.

FIG. 4 illustrates an exemplary operation of a wearable device 101 receiving an input for setting a safety zone set to provide a virtual space. The wearable device 101 of FIGS. 1 to 2 and/or the processor 210 of FIG. 2 may perform an operation of the wearable device 101 described with reference to FIG. 4. The operation of the wearable device 101 described with reference to FIG. 4 may be associated with at least one of operations of FIG. 3 or may be similarly performed.

Referring to FIG. 4, the wearable device 101 may be wirelessly connected to a remote controller 410. A wireless connection between the wearable device 101 and the remote controller 410 may be established through communication circuitry (e.g., the communication circuitry 235 of FIG. 2). In an embodiment, the wearable device 101 may receive an input for starting to set a safety zone for providing a virtual space. The input may be received through a menu (e.g., a setting application and/or any software application executed by the wearable device 101) provided by the wearable device 101. Referring to FIG. 4, the wearable device 101 receiving the input for starting to set the safety zone may enter a mode for setting the safety zone.

Referring to FIG. 4, an exemplary state of the wearable device 101 receiving a signal indicating an input for setting the safety zone from the remote controller 410 is illustrated. The wearable device 101 may display, within a screen 401, a visual object 412 corresponding to the remote controller 410. The wearable device 101 may display, within the screen 401, a virtual line 414 extending from the visual object 412, by using a signal received from the remote controller 410 (e.g., a location and/or a direction of the remote controller 410). The line 414 may be referred to as a ray, a pointer, and/or a cursor.

According to an embodiment, the wearable device 101 may receive, based on the signal received from the remote controller 410, an input for intersecting the line 414 with a plane (e.g., a floor surface of an external environment) represented through the screen 401. The wearable device 101 receiving the input may display, within the screen 401, a line 420 representing a path (or a trajectory) of the line 414 intersecting the plane. Referring to FIG. 4, the wearable device 101 identifying the line 414 intersecting at a location g1 on the plane may display, within the screen 401, a line 420 connecting intersection points between the plane and the line 414 before the location g1, from the location g1. When a shape of the line 420 has a closed curve shape on the plane, the wearable device 101 may determine or set an area inside the line 420 as a safety zone configured to provide a virtual space.

The wearable device 101 identifying the safety zone specified by the line 420 may determine an attribute of the safety zone. The attribute of the safety zone may be determined with respect to at least a portion of a boundary (or a boundary surface) of the safety zone. Referring to FIG. 4, a boundary surface of the safety zone may be a virtual curved surface (or a plane) extending from the line 420 in a direction of the +z axis. The wearable device 101 may determine the attribute of the safety zone by using a distance between the boundary surface and an external object located outside of the safety zone.

Referring to FIG. 4, portions of the boundary surface of the safety zone are illustrated in a form of a grid. A design (or pattern or a texture) of each of the portions may indicate an attribute of the portion determined by the wearable device 101. For example, the wearable device 101 detecting the bookshelf 123 spaced apart from the boundary of the safety zone by less than a designated distance may set portions of the boundary surface of the safety zone spaced apart from the bookshelf 123 by less than the designated distance as the boundary of a first type (e.g., the first type of operation 330 of FIG. 3). For example, when a distance between the boundary of the safety zone and the lamp 122 is less than the designated distance, the wearable device 101 may set portions of the boundary surface of the safety zone adjacent to the lamp 122 as the boundary of the first type.

Referring to FIG. 4, at the outside of the safety zone, an empty space may be formed above the sofa 121. The wearable device 101 may set portions of the boundary surface of the safety zone adjacent to the sofa 121 as the boundary of the first type. The wearable device 101 may set portions of the boundary surface of the safety zone adjacent to the empty space, formed above the sofa 121, as the boundary of a second type (e.g., the second type of operation 350 of FIG. 3).

Referring to FIG. 4, at the outside of the safety zone, an empty space (e.g., a space in which the user 110 is movable) may be formed in a direction of the +x axis from the sofa 121. The wearable device 101 may set portions of the boundary surface of the safety zone adjacent to the empty space as the boundary of the second type. After setting the exemplary safety zone described with reference to FIG. 4, the wearable device 101 may output a notification associated with a boundary of the safety zone. Hereinafter, an exemplary operation of the wearable device 101 outputting a notification associated with the boundary of the safety zone is described with reference to FIG. 5, FIG. 6, and FIGS. 7A to 7D.

FIG. 5 illustrates an exemplary flowchart of an operation of a wearable device providing a virtual space. The wearable device 101 of FIG. 1 and/or FIG. 2, and/or the processor 210 of FIG. 2 may perform an operation of the wearable device described with reference to FIG. 5. An operation of FIG. 5 may be performed based on a wearable device executing a program described with reference to FIG. 2 (e.g., the pass-through manager 253, the space recognizer 272, and/or the location tracker 271). An order in which operations of FIG. 5 are performed is not limited to an order illustrated in FIG. 5. For example, a processor of the wearable device may perform operations of FIG. 5 in an order different from the order illustrated in FIG. 5. For example, the processor of the wearable device may perform at least two operations among operations of FIG. 5 substantially simultaneously. The operation of FIG. 5 may be associated with a safety zone set by an exemplary operation of FIG. 3. For example, after the safety zone is set, the processor of the wearable device may perform the operation of FIG. 5.

Referring to FIG. 5, in operation 510, the processor of the wearable device according to an embodiment may provide a virtual space using displays (e.g., the display 220 of FIG. 2). For example, while being located inside of a safety zone configured to provide a virtual space, the processor may perform the operation 510 to provide the virtual space. The screens 181, 182, and 184 of FIG. 1 may be displayed on the displays controlled by the processor performing the operation 510.

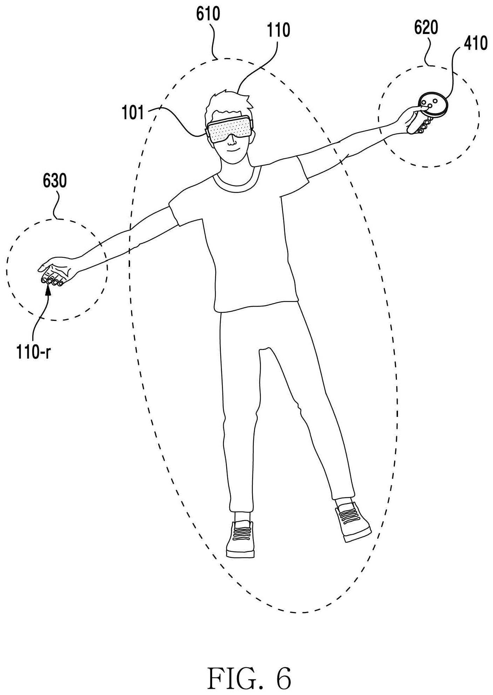

Referring to FIG. 5, in operation 520, the processor of the wearable device according to an embodiment may check or determine whether a distance between the wearable device and/or a designated body part and a boundary of the safety zone is less than a threshold distance. The processor may perform the operation 520 using various distances with respect to the safety zone. For example, the processor may compare or calculate a distance between a location of the wearable device and a boundary of the safety zone, detected using the sensor 230 and/or the external camera 225-2 of FIG. 2. For example, the processor may calculate or determine a distance between a location of a designated body part (e.g., a hand) of a user (e.g., the user 110 of FIG. 1) wearing the wearable device and the boundary of the safety zone, detected using the sensor 230 and/or the external camera 225-2 of FIG. 2. For example, the processor may determine or identify a distance between a location of an external electronic device (e.g., the remote controller 410 of FIG. 4) connected through the communication circuitry 235 of FIG. 2 and the boundary of the safety zone. The illustrated distances are exemplarily described with reference to FIG. 6.

In operation 520, when the wearable device and/or a designated body part is spaced apart from the boundary of the safety zone by less than the threshold distance (520-Yes), the processor may perform operation 530. When both the wearable device and the designated body part are spaced apart from the boundary of the safety zone by exceeding the threshold distance (520-No), the processor may not execute a function of operation 530 and may maintain providing the virtual space of operation 510. For example, at the inside of the safety zone, while being spaced apart from the boundary of the safety zone by exceeding the threshold distance, the processor may maintain providing the virtual space of operation 510.

Referring to FIG. 5, in operation 530, the processor of the wearable device according to an embodiment may execute a function for notifying approach to the boundary, according to a type of a portion of the boundary being less than the threshold distance. A type of operation 530 may include types set to each of portions of the boundary surface described with reference to FIG. 3 to FIG. 4. The type of operation 530 may be associated with a collision risk (or an accident risk) that may be caused when being moved outside of the safety zone. For example, the type of operation 530 may include a first type for indicating a boundary having a relatively high collision risk and a second type for indicating a boundary having a relatively low collision risk.

For example, when detecting the wearable device moving toward a boundary of the first type, the processor may output an alarm (or a warning) corresponding to the first type. When detecting the wearable device moving toward a boundary of the second type, the processor may output a notification corresponding to the second type. The alarm corresponding to the first type may include at least one of a virtual object of a first size having a first designated color such as red, a haptic feedback (e.g., vibration) of a first intensity, and an audio signal of a first volume. The notification corresponding to the second type may include at least one of a virtual object of a second size (e.g., a size smaller than the first size) having a second designated color (e.g., green and/or blue), a haptic feedback (e.g., vibration) of a second intensity (e.g., an intensity smaller than the first intensity), and an audio signal of a second volume (e.g., a volume smaller than the first volume).

FIG. 6 illustrates an exemplary reference area (e.g., reference areas 610, 620, and 630) formed to determine whether the wearable device 101 approaches a boundary of a safety zone. The wearable device 101 of FIG. 1 and/or FIG. 2, and/or the processor 210 of FIG. 2 may perform an operation of the wearable device 101 described with reference to FIG. 6. An operation of FIG. 6 may be performed based on the wearable device 101 executing a program (e.g., the pass-through manager 253 and/or the location tracker 271) described with reference to FIG. 2.

According to an embodiment, the wearable device 101 may detect a location of the wearable device 101 using a sensor (e.g., the sensor 230 of FIG. 2) and/or calculate a distance from a boundary of a safety zone. For example, the wearable device 101 may calculate a location in an external environment and/or a distance from the boundary of the safety zone, by using a coordinate (e.g., a GPS coordinate) indicating the location of the wearable device 101 detected from the sensor.

For example, the wearable device 101 may set or determine a reference area 610 including a body of a user 110 wearing the wearable device 101. The reference area 610 may be a three-dimensional virtual space formed based on a location of the wearable device 101. Although the reference area 610 having a shape of an ellipsoid is exemplarily illustrated, an embodiment is not limited thereto.

For example, the wearable device 101 may set a reference area 620 including the remote controller 410. The reference area 620 may be a three-dimensional virtual space formed based on a location of the remote controller 410. The wearable device 101 may identify or determine the reference area 620 using a GPS coordinate of the remote controller 410, received from the remote controller 410 through the communication circuitry 235 of FIG. 2. The reference area 620 may have a shape of a sphere based on the remote controller 410. An embodiment is not limited thereto.

For example, the wearable device 101 may set a reference area 630 including a hand (e.g., a right hand 110-r) of a user wearing the wearable device 101. The reference area 630 may be set or generated based on a location of the right hand 110-2 detected using the external camera 225-2 of FIG. 2 (or the sensor 230 of FIG. 2 such as a LiDAR sensor). The reference area 630 may have a shape of a sphere (or an ellipsoid) including the right hand 110-r. An embodiment is not limited thereto.

In an embodiment in which at least one reference area (e.g., the reference areas 610, 620, and 630) associated with the wearable device 101 and/or the user 110 wearing the wearable device 101 is set, the wearable device 101 may determine whether to output a notification associated with a boundary of a safety zone, by using a positional relationship between the boundary of the safety zone and the reference area. For example, the wearable device 101 may check or determine whether each of the reference areas 610, 620, and 630 intersects (or overlaps) with the boundary of the safety zone, by using an algorithm such as a collision test. In an embodiment of FIG. 6, when the boundary surface of the safety zone and at least one of the reference areas 610, 620, and 630 intersect, the wearable device 101 may output a notification based on a type (e.g., the first type and/or the second type) of a portion of the boundary surface intersecting with at least one of the reference areas 610, 620, and 630.

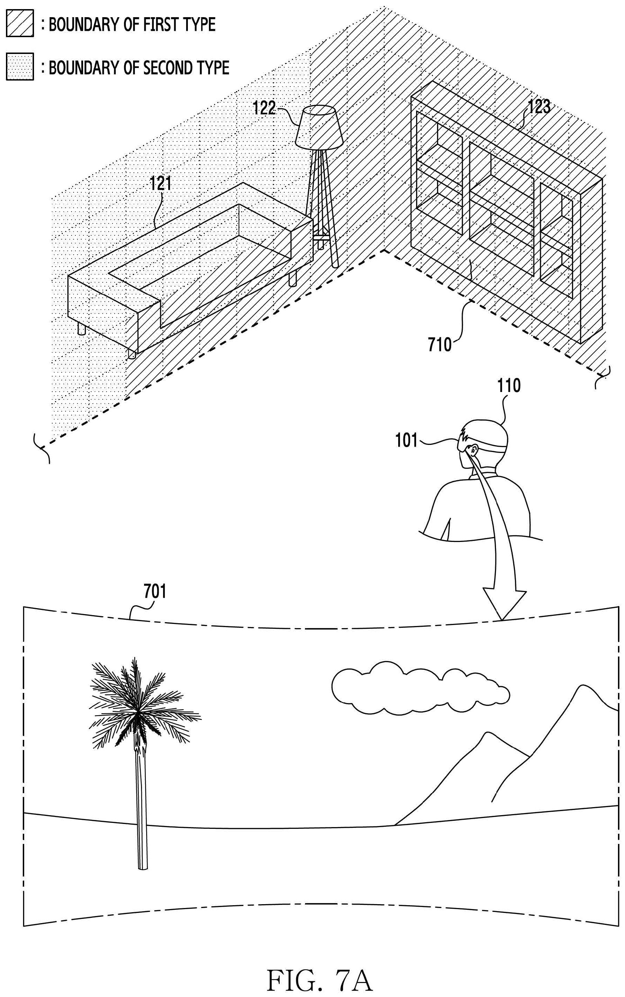

Hereinafter, an exemplary UI displayed by the wearable device 101 in a state in which at least one of the reference areas 610, 620, and 630 intersects with the boundary surface of the safety zone is described with reference to FIGS. 7A to 7D. The UI may be provided differently according to a collision risk between an external object located outside of the safety zone and the user 110.

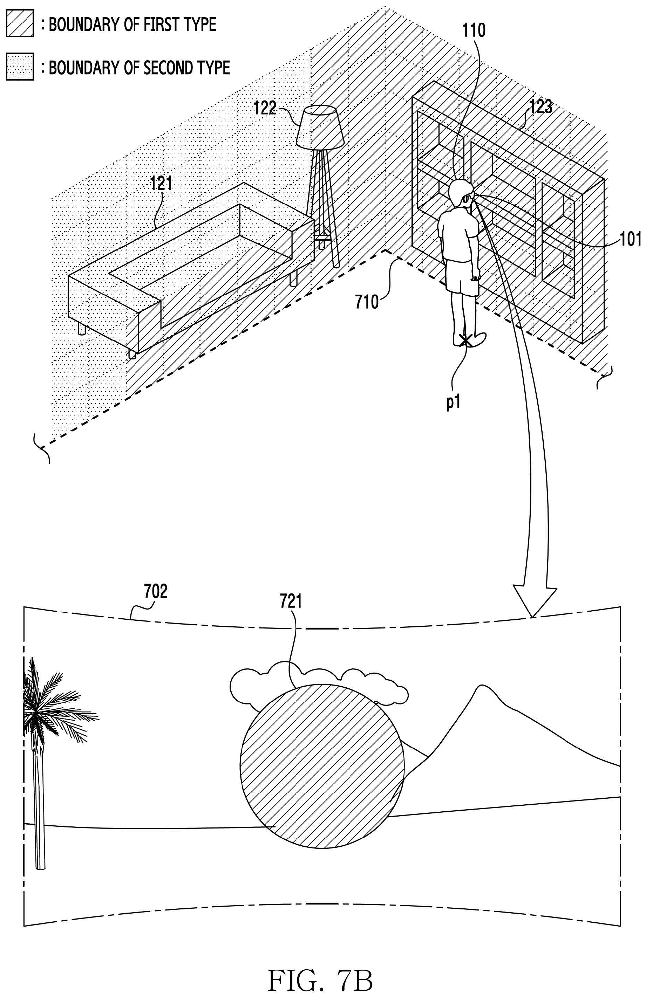

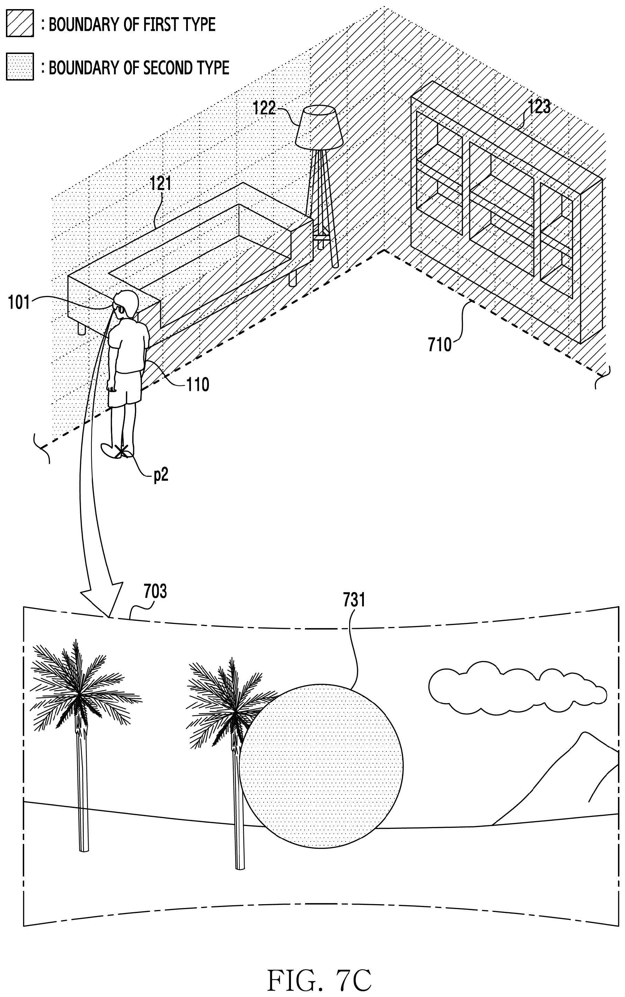

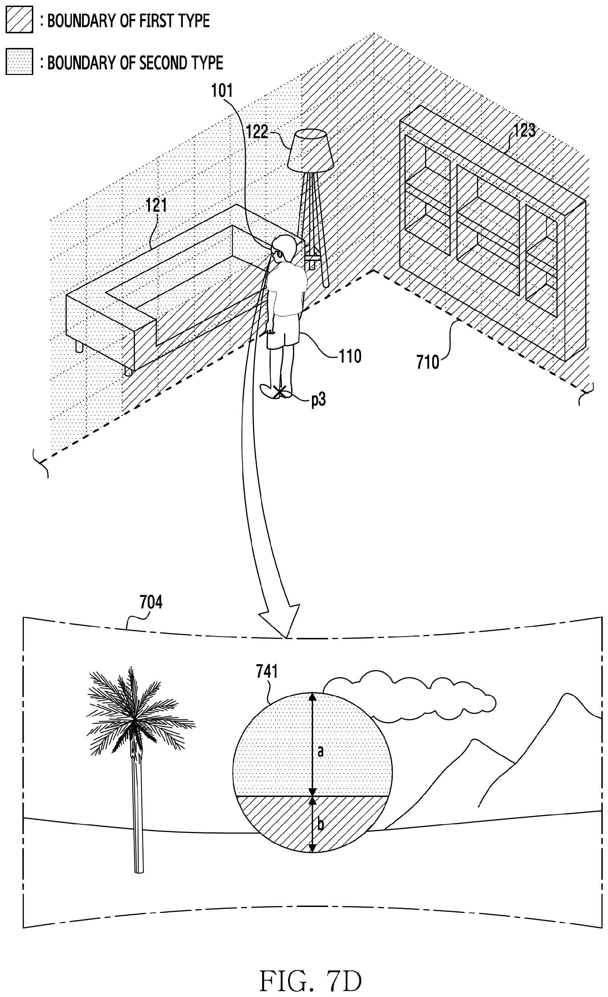

FIGS. 7A, 7B, 7C, and 7D illustrate exemplary screens 701, 702, 703, and 704 displayed by a wearable device 101 to notify a boundary of a safety zone. The wearable device 101 of FIGS. 1 to 2 and/or the processor 210 of FIG. 2 may perform an operation of the wearable device 101 described with reference to FIGS. 7A to 7D. The operation of the wearable device 101 described with reference to FIGS. 7A to 7D may be associated with at least one of operations of FIG. 3 and/or FIG. 5.

Referring to FIG. 7A, an exemplary screen 701 displayed by the wearable device 101 located inside of the safety zone 710 is illustrated. In an embodiment including displays configured to be positioned toward eyes of a user 110 wearing the wearable device 101, the wearable device 101 may display the screen 701 on at least one of the displays. The safety zone 710 may have a shape of a closed curve of the line 420 described with reference to FIG. 4. The safety zone 710 may have an attribute determined based on an operation described with reference to FIG. 4.

Referring to FIG. 7A, while being located inside of the safety zone 710, the wearable device 101 may display the screen 701 including an image and/or a video representing at least a portion of a virtual space. In order to provide a user experience based on VR, the wearable device 101 may display, on an entire area of the screen 701, a virtual space having a layout independent of an external environment.

While displaying the screen 701, the wearable device 101 may identify a location of the wearable device 101 and/or a movement of the wearable device 101, by using a sensor (e.g., the sensor 230 of FIG. 2). When changing a virtual space by linking with the location of the wearable device 101, the wearable device 101 may display the screen 701 including a view of the virtual space, viewed from a location in the virtual space linked with the location of the wearable device 101. In an exemplary state of FIG. 7A, when a head of a user 110 wearing the wearable device 101 is rotated toward a right side, the wearable device 101 may display, within the screen 701, another portion of the virtual space corresponding to a right side of a portion of the virtual space that was displayed before the rotation. In the exemplary state of FIG. 7A, when the user 110 wearing the wearable device 101 moves, the wearable device 101 may display, within the screen 701, a portion of the virtual space mapped to a location of the moved user 110.

The user 110 viewing the virtual space included in the screen 701 may move in accordance with a sense of perspective of the virtual space. Referring to FIG. 7B, the user 110 recognizing the virtual space may move to a location p1 adjacent to a boundary of the safety zone 710. At the location p1 adjacent to the boundary of the safety zone 710, the wearable device 101 may display a screen 702. The screen 702 may include an image and/or a video with respect to the virtual space viewed from a location in the virtual space linked with the location p1.

Referring to the exemplary screen 702 of FIG. 7B, based on identifying the wearable device 101 being moved toward a portion of the boundary of the safety zone 710 from the inside of the safety zone 710, the wearable device 101 may provide, using the displays, a virtual plane 721 representing a portion to which the wearable device 101 approaches. As described above with reference to FIG. 4, since the bookshelf 123 is spaced apart from the boundary of the safety zone 710 adjacent to the location p1 by less than a designated distance, the wearable device 101 may determine a portion of the boundary of the safety zone 710 adjacent to the location p1 as the boundary of the first type. At the location p1 adjacent to the boundary of the first type, the wearable device 101 may display the virtual plane 721 to notify a movement of the wearable device 101 toward the boundary of the first type.

For example, the wearable device 101 may provide, using the displays, the virtual plane 721 having a color (e.g., a first designated color including red) determined using information indicating whether it is movable outside of the safety zone 710 through a portion of the safety zone 710 adjacent to the location p1. The virtual plane 721 may have a binocular disparity and/or a depth value based on a distance between the location p1 and the boundary of the safety zone 710. For example, the wearable device 101 may display, using the displays, the virtual plane 721 having a sense of perspective as if the user 110 at the location p1 views a boundary surface of the safety zone 710 at the location p1. For example, a binocular disparity of the virtual plane 721 included in the screen 702 may be set based on a distance between the location p1 and a boundary surface (e.g., a portion of the boundary surface between the bookshelf 123 and the user 110) of the safety zone 710 adjacent to the location p1.

Referring to FIG. 7B, in an exemplary state notifying a movement of the wearable device 101 toward the boundary of the first type, the wearable device 101 may display the virtual plane 721 having a first size and a first designated color. The first size of the virtual plane 721 may be predetermined or may be determined according to a distance between the location p1 and the boundary of the first type. For example, the first designated color may be determined as a designated primary color such as red. For example, the first designated color may be determined according to a color distribution of pixels of displays controlled to display the screen 702. For example, the first designated color may be determined as a complementary color of an average color indicated by the color distribution.

In an embodiment, the wearable device 101 detecting movement of the wearable device 101 toward the boundary of the first type may control a haptic actuator (or a vibration motor) to provide vibration feedback of a first intensity. In response to detecting a movement of the wearable device 101 toward the boundary of the first type, the wearable device 101 may reproduce an audio signal (e.g., an audio signal in which a designated melody for warning is recorded) of a first volume. The wearable device 101 detecting movement of the wearable device 101 toward the boundary of the first type may output the virtual plane 721, the vibration feedback of the first intensity, the audio signal of the first volume, or a combination thereof as a UI for warning a movement of the wearable device 101.

Referring to FIG. 7C, the user 110 recognizing a virtual space may move to a location p2 adjacent to the boundary of the safety zone 710. At the location p2 adjacent to the boundary of the safety zone 710, the wearable device 101 may display a screen 703. The screen 703 may include an image and/or a video representing a view of the virtual space, viewed from a location in the virtual space mapped to the location p2.

In the exemplary screen 703 of FIG. 7C, the wearable device 101 may display, together with the view of the virtual space, a virtual plane 731 for notifying a movement of the wearable device 101 toward the boundary of the safety zone 710. As described above with reference to FIG. 4, since an empty space in which the user 110 is movable is formed at the outside of the safety zone 710 adjacent to the location p2, the wearable device 101 may set a portion of the boundary of the safety zone 710 adjacent to the location p2 as a boundary of a second type. At the location p2 adjacent to the boundary of the second type, the wearable device 101 may display the virtual plane 731 to notify a movement of the wearable device 101 toward the boundary of the second type.

For example, the wearable device 101 may determine an attribute (e.g., a location, a size, a transparency, a radius, a diameter, and/or a color) of the virtual plane 731 by using an attribute assigned to a portion of the boundary of the safety zone 710 adjacent to the location p2. A location of the virtual plane 731 within the screen 703 may be associated with a positional relationship between the location p2 and a boundary surface of the safety zone 710. In order to notify a movement of the wearable device 101 toward the boundary of the second type, the wearable device 101 may display the virtual plane 731 having a second size and a second designated color. For example, the second size may be predetermined as a size smaller than the first size or may be determined according to a distance between the location p2 and the boundary of the second type. For example, the second designated color may be determined as a color (e.g., a designated primary color such as blue) different from the first designated color. For example, the second designated color may be determined according to a color distribution of pixels of the displays controlled to display the screen 703. The virtual plane 731 displayed using a size smaller than the first size and the second designated color different from the first designated color may have a relatively lower visibility than the virtual plane 721 of FIG. 7B having the first size and the first designated color.

When displaying each of the virtual plane 721 of FIG. 7B and the virtual plane 731 of FIG. 7C, the wearable device 101 may gradually increase sizes of the virtual plane 721 and the virtual plane 731 to the first size and the second size, respectively. A speed at which the size of the virtual plane 721 increases may be different from a speed at which the size of the virtual plane 731 increases. For example, the wearable device 101 may determine a speed at which a size of a virtual plane (e.g., the virtual planes 721 and 731) increases, according to an attribute of a boundary. For example, a speed at which the size of the virtual plane 721 corresponding to the boundary of the first type increases may be higher than a speed at which the size of the virtual plane 731 corresponding to the boundary of the second type increases.

An embodiment is not limited thereto, and the wearable device 101 may display, on the virtual plane 731, an image and/or a video with respect to an external environment being obtained through a camera (e.g., the external camera 225-2 of FIG. 2). In terms of displaying the image and/or the video with respect to the external environment, the virtual plane 731 may be referred to as a partial pass-through object, a penetration area, a transparent area, and/or a window area.

In an embodiment, the wearable device 101 detecting a movement of the wearable device 101 toward the boundary of the second type may control a haptic actuator (or a vibration motor) to provide vibration feedback of a second intensity less than the first intensity. The wearable device 101 detecting a movement of the wearable device 101 toward the boundary of the second type may reproduce an audio signal of a second volume less than the first volume. Based on detecting a movement of the wearable device 101 toward the boundary of the second type, the wearable device 101 may output the virtual plane 731, the vibration feedback of the second intensity, the audio signal of the second volume, or a combination thereof as a UI for notifying a movement of the wearable device 101.

Referring to FIG. 7D, the user 110 recognizing the virtual space may move to a location p3 adjacent to the boundary of the safety zone 710. At the location p3 adjacent to the boundary of the safety zone 710, the wearable device 101 may display a screen 704. The screen 704 may include an image and/or a video representing a view of the virtual space viewed from a location in the virtual space linked with the location p3.

In the exemplary screen 704 of FIG. 7D, the wearable device 101 may display, together with a view of the virtual space, a virtual plane 741 for notifying a movement of the wearable device 101 toward a boundary of the safety zone 710. As described above with reference to FIG. 4, since the sofa 121 is located beyond the boundary of the safety zone 710 adjacent to the location p3, the wearable device 101 may determine a portion of the boundary of the safety zone 710 adjacent to the sofa 121 as the boundary of the first type and may determine another portion of the boundary of the safety zone 710 adjacent to an empty space above the sofa 121 as the boundary of the second type.

Referring to FIG. 7D, at the location p3 adjacent to the boundary of the safety zone 710, the wearable device 101 may display the virtual plane 741 for notifying a movement of the wearable device 101 toward the boundary. The virtual plane 741 representing a portion of the boundary surface of the safety zone 710 may have a color and/or a size according to a type of a portion of a boundary surface corresponding to the virtual plane 741. A location of the virtual plane 741 and/or a binocular disparity within the screen 704 may be determined according to a positional relationship between the portion of the boundary surface of the safety zone 710 corresponding to the virtual plane 741 and the location p3.

Referring to FIG. 7D, a section b of the virtual plane 741 corresponding to a portion of the boundary surface of the safety zone 710 adjacent to the sofa 121 may have a first color defined for notifying the boundary of the first type. A section a of the virtual plane 741 corresponding to another portion of the boundary surface of the safety zone 710 adjacent to an empty space formed above the sofa 121 may have a second color defined for notifying the boundary of the second type. In an exemplary state of FIG. 7D for notifying both the boundary surface of the first type and the boundary surface of the second type using the virtual plane 741, the wearable device 101 may output vibration feedback of an intermediate intensity (or a weighted sum) between a first intensity and a second intensity. In an exemplary state of FIG. 7D, the wearable device 101 may reproduce an audio signal of an intermediate volume (or a weighted sum) between a first volume and a second volume. The wearable device 101 may display, within a section b of the virtual plane 741, an image and/or a video with respect to an external environment being obtained through a camera.

As described above, according to an embodiment, the wearable device 101 may output a notification based on an attribute (e.g., a collision risk and/or a type) of a portion of a boundary of the safety zone 710 approached by the user 110 when the user 110 wearing the wearable device 101 moves toward the boundary of the safety zone 710. For example, a notification displayed by the wearable device 101 at a first portion of the boundary may be different from a notification displayed by the wearable device 101 at a second portion of the boundary. For example, based on detecting the wearable device 101 moving toward the first boundary of the safety zone 710, the wearable device 101 may provide, using the displays, a first virtual object (e.g., the virtual plane 721 of FIG. 7B) of a first color representing the first boundary. For example, based on detecting the wearable device 101 moving toward a second boundary of the safety zone 720, the wearable device 101 may provide, using the displays, a second virtual object (e.g., the virtual plane 731 of FIG. 7C) of a second color representing the second boundary.

Hereinafter, an exemplary operation of the wearable device 101 moving from the inside of the safety zone 710 to the outside of the safety zone 710 is described with reference to FIG. 8, FIGS. 9A, 9B, and 9C, FIG. 10A, and FIG. 10B.

FIG. 8 illustrates a flowchart of a wearable device according to an embodiment. The wearable device 101 of FIG. 1 and/or FIG. 2, and/or the processor 210 of FIG. 2 may perform an operation of the wearable device described with reference to FIG. 8. An operation of FIG. 8 may be performed based on the wearable device 101 executing a program (e.g., the pass-through manager 253) described with reference to FIG. 2. An order in which operations of FIG. 8 are performed is not limited to an order illustrated in FIG. 8. For example, a processor of the wearable device may perform operations of FIG. 8 in an order different from the order illustrated in FIG. 8. For example, the processor of the wearable device may perform at least two operations among operations of FIG. 8 substantially simultaneously. Operations of FIG. 8 may be associated with a safety zone set by an exemplary operation of FIG. 3. For example, after the safety zone is set, the processor may perform operations of FIG. 8.

Referring to FIG. 8, in operation 810, the processor of the wearable device according to an embodiment may provide a virtual space using displays. The processor may perform operation 810 similarly to operation 510 of FIG. 5. For example, the processor may provide a virtual space to a user (e.g., the user 110 of FIG. 1) wearing the wearable device. While providing the virtual space of operation 810, the processor may repeatedly perform operation 820.

Referring to FIG. 8, in operation 820, the processor of the wearable device according to an embodiment may check or identify whether the wearable device is located inside of a safety zone (e.g., the safety zone 130 of FIG. 1) for safety of the user wearing the wearable device. The processor may detect a location of the wearable device using sensor data of a sensor (e.g., the sensor 230 of FIG. 2). By comparing the detected location and the safety zone, the processor may determine whether the wearable device is located inside of the safety zone.

Referring to FIG. 8, while the wearable device is located inside of the safety zone (820-Yes), the processor may maintain providing the virtual space of operation 810. When detecting the wearable device moving toward a boundary of the safety zone from the inside of the safety zone, the processor may maintain providing the virtual space of operation 810 and execute a function for notifying the boundary as described above with reference to FIG. 5, FIG. 6, and FIGS. 7A to 7D. When the wearable device is located outside of the safety zone (820-No), the processor may perform operation 830.

Referring to FIG. 8, in operation 830, the processor of the wearable device according to an embodiment may check or identify whether the wearable device is moved outside of the safety zone through a boundary of a first type of the safety zone. The boundary of the safety zone may have an attribute (e.g., the first type and/or the second type described above with reference to FIG. 3) associated with a collision risk with respect to an external object, based on the operation of the wearable device described above with reference to FIG. 3 to FIG. 4. When an external object is located at a distance less than a designated distance from a portion of the boundary of the safety zone, the portion of the boundary may be determined as the boundary of the first type. When an external object is located at a distance greater than or equal to a designated distance from a portion of the boundary of the safety zone, or when any external object does not exist beyond the portion, the portion of the boundary may be determined as the boundary of the second type.

Referring to FIG. 8, when the wearable device is moved outside of the safety zone through the boundary of the first type (830-Yes), the processor may perform operation 840. When the wearable device is moved outside of the safety zone through the boundary of the second type different from the first type (830-No), the processor may perform operation 850.

Referring to FIG. 8, in operation 840, the processor of the wearable device according to an embodiment may cease providing a virtual space using the displays, and display a video obtained using at least one camera (e.g., the camera 225 of FIG. 2 and/or the external camera 225-2). In order to cease providing the virtual space, the processor may at least temporarily cease a software application executed for providing the virtual space. For example, the processor may change or switch a state of the software application from a foreground state to a background state. When ceasing to execute the software application, the processor may display, on the displays, a virtual object (e.g., an icon) for resuming execution of the software application.

In operation 840, the processor may display an image and/or a video with respect to an external environment, being obtained using at least one camera. The processor may display the image and/or the video on an entire display area of the displays. For example, the processor may provide a view of an external environment through the displays, by entering a pass-through mode. While displaying the image and/or the video with respect to the external environment, a user may see an external object beyond a boundary of the first type by using the image and/or the video. For example, the processor may display an external object (e.g., an obstacle such as a wall) adjacent to a user by entering the pass-through mode.

Referring to FIG. 8, in operation 850, the processor of the wearable device according to an embodiment may check or identify whether a virtual space is defined at a location of the wearable device moved outside of the safety zone. The processor may check or identify whether the virtual space is defined at a location of the wearable device detected by a sensor. For example, the processor may check whether the virtual space is defined at a current location of the wearable device by using a software application executed to provide the virtual space. For example, the processor may check movability and/or controllability at a location in the virtual space corresponding to a location of the wearable device.

In operation 850, the processor may check whether a virtual space mapped to the safety zone is extended to the outside of the safety zone. For example, the processor may check whether the virtual space, which was provided while the wearable device is located within the safety zone, is opened to the outside of the safety zone. When the virtual space is extended to a location of the wearable device at the outside of the safety zone, or the virtual space is set to include a location of the wearable device, or the virtual space is defined at a location of the wearable device at the outside of the safety zone (850-Yes), the processor may perform operation 860.

For example, when the virtual space is not extended to a location of the wearable device at the outside of the safety zone, or the virtual space is set not to include a location of the wearable device, or the virtual space is not defined at a location of the wearable device at the outside of the safety zone (850-No), the processor may perform operation 840. For example, while providing the virtual space defined in the safety zone, based on identifying the wearable device being moved outside of the safety zone, the processor may cease providing the virtual space.

Referring to FIG. 8, in operation 860, the processor of the wearable device according to an embodiment may maintain providing the virtual space and display a video obtained using at least one camera. The processor may (continuously) display, on the displays, an image and/or a video representing the virtual space viewed from a location of the virtual space corresponding to a location at the outside of the safety zone. The processor may display, on the displays, a view of the virtual space having a designated transparency. For example, while providing a virtual space defined beyond a safety zone set for safety of a user wearing the wearable device, based on identifying the wearable device being moved outside of the safety zone, the processor may increase transparency of the virtual space provided using the displays. By increasing the transparency of the virtual space, the processor may provide, using the displays, a video being obtained using at least one camera. For example, as in the screen 183 of FIG. 1, the processor may substantially simultaneously visualize views of the virtual space and an external space.

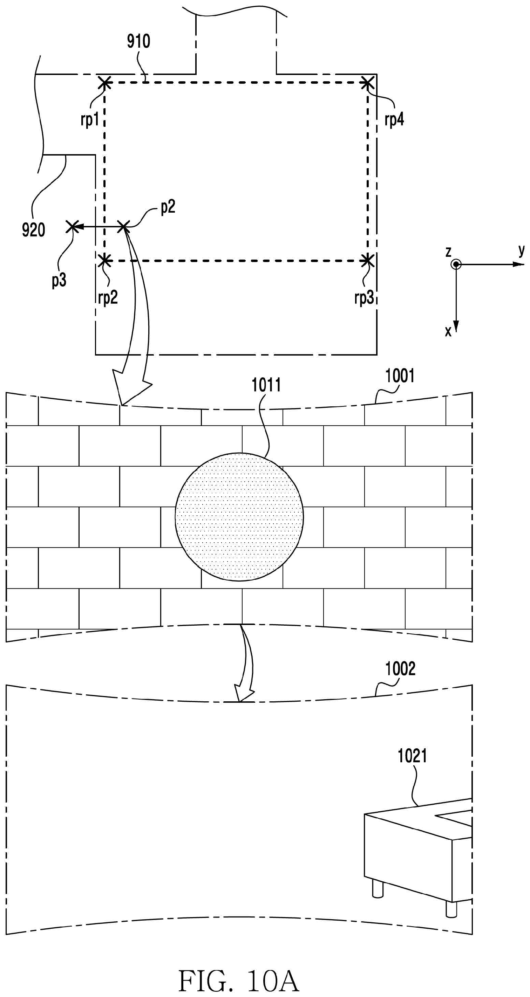

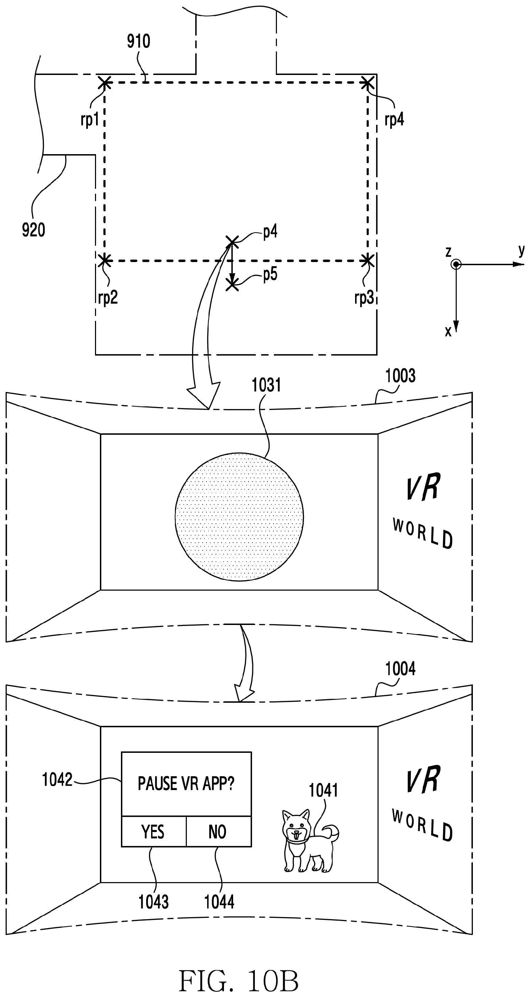

In operation 860, the processor may display a virtual object for checking whether to cease providing the virtual space, based on identifying the wearable device being moved outside of the safety zone, while providing the virtual space defined beyond the safety zone. The virtual object is exemplarily described with reference to FIG. 10A and/or FIG. 10B.

As described above, according to an embodiment, the processor of the wearable device may conditionally cease providing a virtual space when the wearable device is moved outside of safety zone. For example, when the wearable device is moved outside the safety zone through a boundary of a first type having a relatively high possibility of collision with an external object, the processor may immediately cease providing the virtual space. For example, when the wearable device is moved outside of the safety zone through a boundary of a second type having a relatively low possibility of collision with an external object, the processor may provide or display a video with respect to an external environment and a video with respect to the virtual space, which are mixed according to transparency. For example, the processor may maintain a VR mode or switch to a pass-through mode, according to a type of the boundary of the safety zone through which the wearable device has passed.

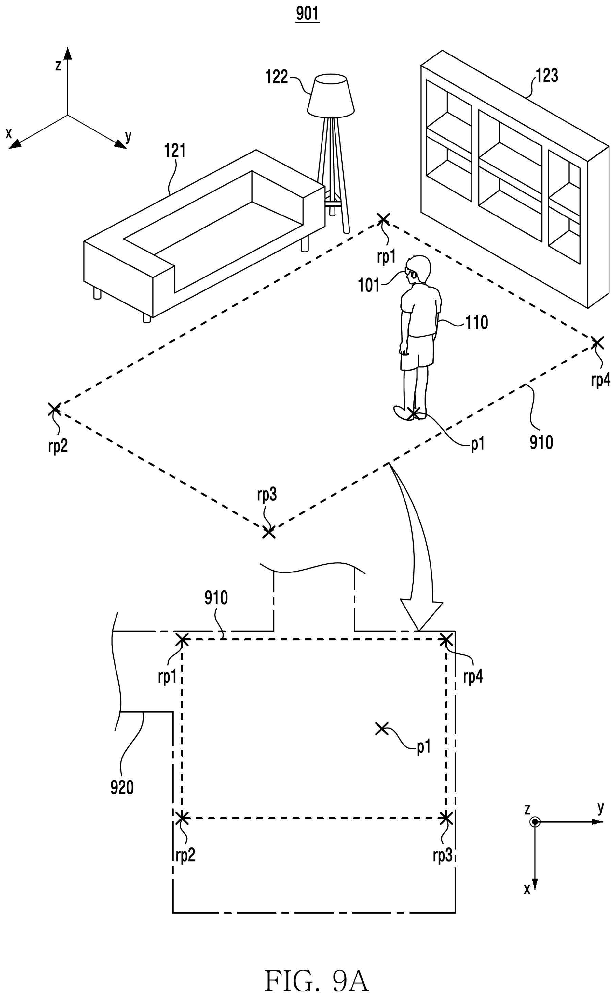

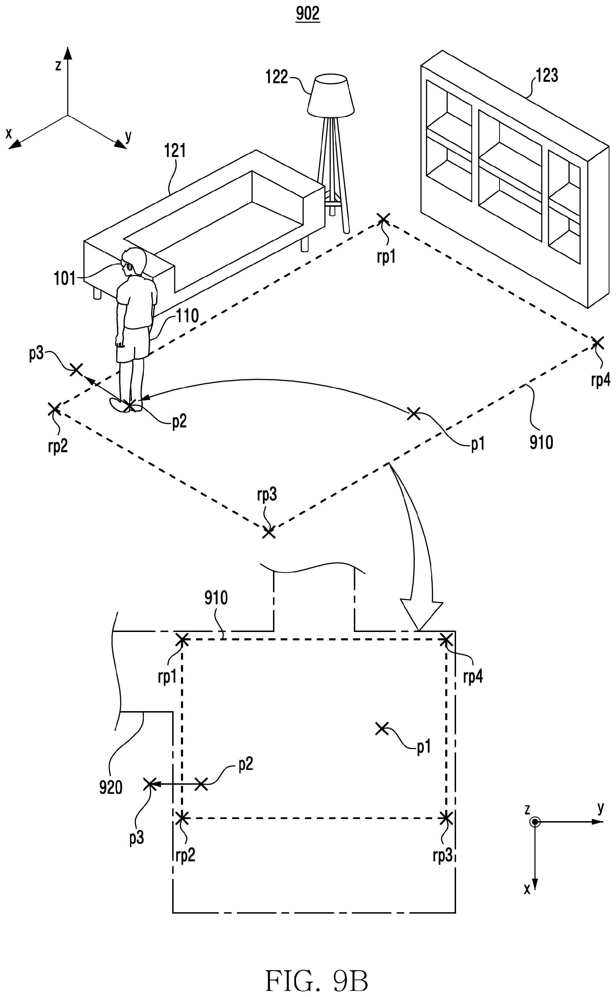

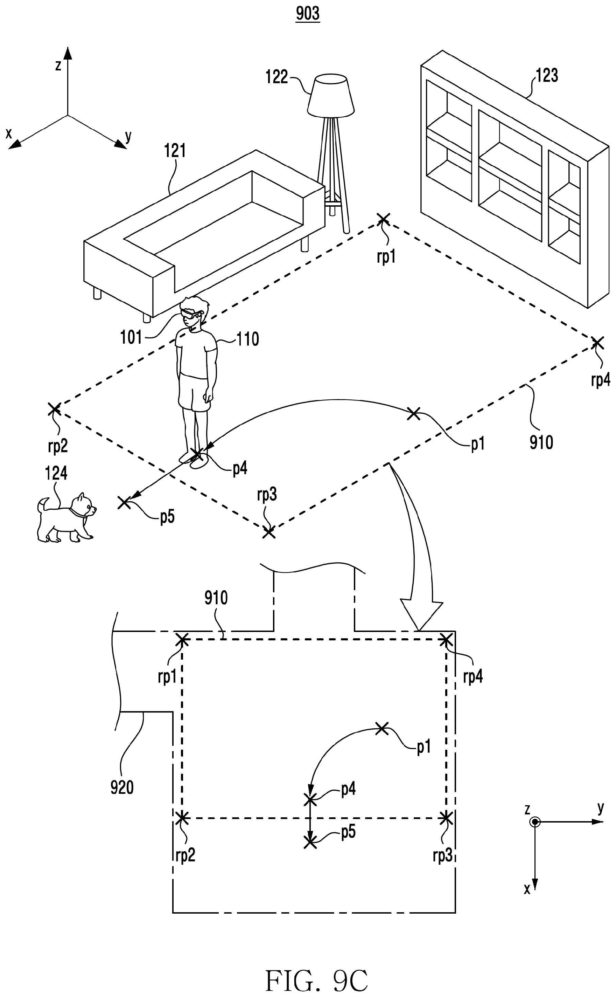

Hereinafter, exemplary screens displayed by a wearable device performing operations of FIG. 8 are described with reference to FIGS. 9A, 9B, 9C, FIG. 10A, and/or FIG. 10B.

FIGS. 9A, 9B, and 9C illustrate an exemplary operation of a wearable device 101 detecting a movement of a user 110 wearing the wearable device 101. The wearable device 101 of FIG. 1 and/or FIG. 2, and/or the processor 210 of FIG. 2 may perform an operation of the wearable device 101 described with reference to FIGS. 9A to 9C. The operation of the wearable device 101 of FIGS. 9A to 9C may be performed based on the wearable device 101 executing a program (e.g., the pass-through manager 253) of FIG. 2. The operation of the wearable device 101 described with reference to FIGS. 9A to 9C may be associated with at least one of operations of FIG. 3, FIG. 5, and/or FIG. 8.

Referring to FIG. 9A, an exemplary state 901 of the wearable device 101 located at a location p1 within a safety zone 910 is illustrated. Referring to FIG. 9A, the safety zone 910 having a shape of a quadrangle having four vertices rp1, rp2, rp3, and rp4 is illustrated. The shape of the safety zone 910 is not limited thereto. A virtual space 920 provided using displays of the wearable device 101 may be defined by a software application executed by the wearable device 101, independently of a shape and/or a size of the safety zone 910.

In the exemplary state 901 of FIG. 9A, the wearable device 101 may determine a location in the virtual space corresponding to a current location p1 of the wearable device 101, by using mapping between a first coordinate system used for identifying a location of the wearable device 101 in the safety zone 910 and a second coordinate system of the virtual space 920. The wearable device 101 may display, using the displays, a view of the virtual space 920 viewed from a determined location in the virtual space. The virtual space 920 provided by the wearable device 101 in the state 901 may be displayed through an entire display area of the displays. The user 110 viewing (or recognizing) the virtual space 920 through the displays may move according to a sense of perspective of the virtual space 920.

Referring to FIG. 9B, an exemplary state 902 in which the user 110 is moved to a location p2 is illustrated. In the state 902, based on detecting the wearable device 101 located at the location p2 adjacent to a boundary of the safety zone 910, the wearable device 101 may execute a function for notifying the boundary. For example, the wearable device 101 may display a virtual object for notifying the boundary of the safety zone 910 adjacent to the location p2, by performing an operation described above with reference to FIGS. 5 to 6 and FIGS. 7A to 7D. For example, at the location p2 adjacent to the boundary of the second type, the wearable device 101 may display a UI for notifying the boundary of the second type, such as the virtual plane 731 of FIG. 7C.

For example, when the user 110 moves from the location p2 to the location p3 outside of the safety zone 910, the wearable device 101 may perform operations of FIG. 8 to determine whether to cease providing the virtual space 920. Referring to mapping between the safety zone 910 and the virtual space 920 of FIG. 9B, since the location p3 outside of the safety zone 910 corresponds to the outside of the virtual space 920, the virtual space 920 may not be defined at the location p3. Since the virtual space 920 is not defined at the location p3 outside of the safety zone 910, or the virtual space 920 is not set to include the location p3, or the virtual space 920 is not extended to the location p3, the wearable device 101 may perform operation 840 of FIG. 8. For example, at the location p3, the wearable device 101 may at least temporarily cease providing the virtual space 920. An exemplary screen displayed by the wearable device 101 at the location p3 of FIG. 9B is described with reference to FIG. 10A.

Referring to FIG. 9C, an exemplary state 903 in which a user 110 is moved to a location p4 is illustrated. In the state 903, based on detecting the wearable device 101 located at the location p4 adjacent to a boundary of the safety zone 910, the wearable device 101 may display a virtual object for notifying the boundary. For example, at the location p4 adjacent to the boundary of the second type, the wearable device 101 may display a UI for notifying the boundary of the second type, such as the virtual plane 731 of FIG. 7C.

For example, when the user 110 moves from the location p4 to a location p5 outside of the safety zone 910, the wearable device 101 may perform operations of FIG. 8. Referring to FIG. 9C, the location p5 may be included at the inside of the virtual space 920. For example, the virtual space 920 may be defined at the location p5. For example, the virtual space 920 may be extended from the inside of the safety zone 910 to the location p5 at the outside of the safety zone 910. Since the virtual space 920 is defined at the location p5 outside of the safety zone 910, or the virtual space 920 is set to include the location p5, or the virtual space 920 is extended to the location p5, the wearable device 101 may perform operation 860 of FIG. 8. For example, at the location p5, the wearable device 101 may provide the virtual space 920. At the same time as providing the virtual space 920, the wearable device 101 may display an image and/or a video obtained from a camera, based on a pass-through mode. An exemplary screen displayed by the wearable device 101 at the location p5 of FIG. 9C is described with reference to FIG. 10B.

Hereinafter, screens displayed by the wearable device 101 at exemplary locations p2, p3, p4, and p5 of FIG. 9B and FIG. 9C are exemplarily described with reference to FIG. 10A and FIG. 10B.

FIG. 10A and FIG. 10B illustrate exemplary screens 1001, 1002, 1003, and 1004 displayed by a wearable device according to a geographic location. The wearable device 101 of FIG. 1 and/or FIG. 2, and/or the processor 210 of FIG. 2 may perform an operation of the wearable device 101 described with reference to FIG. 10A to FIG. 10B. The operation of the wearable device 101 of FIG. 10A to FIG. 10B may be performed based on the wearable device 101 executing a program (e.g., the pass-through manager 253) of FIG. 2. An operation of the wearable device 101 described with reference to FIG. 10A to FIG. 10B may be associated with at least one of operations of FIG. 3, FIG. 5, and/or FIG. 8.

Referring to FIG. 10A, in an exemplary state 902 of FIG. 9B, exemplary screens 1001 and 1002 displayed by the wearable device are illustrated. The screens 1001 and 1002 may be displayed on at least one of displays configured to be positioned toward two eyes of a user (e.g., the user 110 of FIG. 1) wearing the wearable device. Referring to FIG. 10A, an exemplary screen 1001 displayed by the wearable device while being located at the location p2 adjacent to the boundary of the safety zone 910 is illustrated. Since a location in the virtual space 920 corresponding to the location p2 is adjacent to the boundary of the virtual space 920, a virtual plane representing the boundary of the virtual space 920 may be included in the screen 1001.

Referring to the exemplary screen 1001 of FIG. 10A, since the location p2 is adjacent to a boundary (e.g., a boundary line connecting vertices rp1 and rp2) of the safety zone 910, the wearable device may display a virtual object 1011 for notifying the boundary. As described above with reference to FIG. 9B, the wearable device detecting the location p2 adjacent to the boundary of the second type may display, in the screen 1001, the virtual object 1011 for notifying the boundary of the second type. The virtual object 1011 having a shape of a circle is exemplarily illustrated, but an embodiment is not limited thereto.

Referring to FIG. 10A, when the user wearing the wearable device moves from the location p2 to the location p3, the wearable device may display a screen 1002 on displays. As described above with reference to FIG. 9B, since the virtual space 920 is not defined at the location p3 outside of the safety zone 910, the wearable device may cease providing a virtual space. The wearable device may display, within the screen 1002, an image and/or a video being obtained from a camera (e.g., the camera 225 of FIG. 2 and/or the external camera 225-2). For example, a visual object 1021 corresponding to an external object (e.g., the sofa 121 of FIG. 9B) located at an external environment may be displayed through the screen 1002.

Referring to FIG. 10B, in an exemplary state 903 of FIG. 9C, exemplary screens 1003 and 1004 displayed by the wearable device are illustrated. The screens 1003 and 1004 may be displayed on at least one of displays included in the wearable device. Referring to FIG. 10B, based on detecting the location p4 of the wearable device adjacent to a boundary of the safety zone 910, the wearable device may display the screen 1003 including a UI (e.g., a virtual object 1031) for notifying the boundary. The screen 1003 may include a view of the virtual space 920 viewed from a location in the virtual space 920 corresponding to the location p4. In the screen 1003, the virtual object 1031 may have a shape of a plane representing a boundary (e.g., a boundary line connecting vertices rp2 and rp3) of the safety zone 910 adjacent to the location p4.

Referring to FIG. 10B, when the user wearing the wearable device moves from the location p4 to the location p5, the wearable device may display a screen 1004 on displays. As described above with reference to FIG. 9C, since the virtual space 920 is defined at the location p5 outside of the safety zone 910, the wearable device may maintain providing the virtual space. For example, an image and/or a video with respect to the virtual space 920 represented based on a location of the virtual space 920 corresponding to the location p5 may be included in the screen 1004.

At the location p5 outside of the safety zone 910, in order to provide information with respect to an external environment to a user, the wearable device may display, within the screen 1004, an image and/or a video with respect to the external environment. Referring to FIG. 9C, since an image and/or a video with respect to the external environment is included in the screen 1004, a visual object 1041 corresponding to an external object (e.g., the dog 124) adjacent to the location p5 may be displayed on the screen 1004. The image and/or the video with respect to the external environment may be superimposed on an image and/or a video with respect to the virtual space 920.

Referring to FIG. 10B, in the screen 1004, the wearable device may display a virtual object 1042 for checking whether to cease providing the virtual space 920. The virtual object 1042 having a shape of a pop-up window is exemplarily illustrated, but an embodiment is not limited thereto. The wearable device may display the virtual object 1042 including a designated text for checking whether to cease a software application executed to provide the virtual space 920, such as "Pause VR app?". The virtual object 1042 may include virtual objects 1043 and 1044 for receiving an input associated with providing the virtual space 920. In a state of displaying the virtual object 1042, the wearable device may receive an input associated with at least one of the virtual objects 1043 and 1044. The input may be detected or received, based on a gaze, a hand gesture, a speech, and/or a touch gesture with respect to the wearable device of a user wearing the wearable device.

For example, in response to a first input indicating a selection of the virtual object 1043 including a designated text such as "Yes", the wearable device may maintain providing the virtual space 920 as in the screen 1004. In response to a second input indicating a selection of the virtual object 1044 including a designated text such as "No", the wearable device may cease providing the virtual space 920 using the displays. The wearable device receiving the first input and/or the second input may at least temporarily cease displaying the virtual object 1042 in the screen 1004.

As described above, according to an embodiment, the wearable device may determine whether to provide the virtual space 920 at the outside of the safety zone 910, according to a form and/or a state of the virtual space 920 with respect to a geographic location. For example, at the outside of the safety zone 910, the wearable device may continuously provide the virtual space 920. Hereinafter, an exemplary operation of the wearable device, performed to change the virtual space 920 at a boundary of the safety zone 910 is described with reference to FIG. 11, FIGS. 12A, 12B, and 12C, and FIGS. 13A, 13B, and 13C.

FIG. 11 illustrates a flowchart of a wearable device according to an embodiment. The wearable device 101 of FIG. 1 and/or FIG. 2, and/or the processor 210 of FIG. 2 may perform an operation of the wearable device described with reference to FIG. 11. An operation of FIG. 11 may be performed by the wearable device 101 executing a program (e.g., the pass-through manager 253) of FIG. 2. An order in which operations of FIG. 11 are performed is not limited to an order illustrated in FIG. 11. For example, a processor of the wearable device may perform operations of FIG. 11 in an order different from the order illustrated in FIG. 11. For example, the processor of the wearable device may perform at least two operations among operations of FIG. 11 substantially simultaneously. Operations of FIG. 11 may be at least partially associated with operations of FIG. 3, FIG. 5, and/or FIG. 8.

Referring to FIG. 11, in operation 1110, the processor of the wearable device according to an embodiment may provide a virtual space using displays. The processor may perform operation 1110 similarly to operation 510 of FIG. 5 and/or operation 810 of FIG. 8. For example, the processor may display, to a user (e.g., the user 110 of FIG. 1) wearing the wearable device, an image and/or a video representing at least a portion of the virtual space. While providing a virtual space of operation 1110, the processor may repeatedly perform operation 1120.

Referring to FIG. 11, in operation 1120, the processor of the wearable device according to an embodiment may check or identify whether a distance between a boundary of the first type of the safety zone and the wearable device and/or a designated body part is less than a threshold distance. The safety zone may be set based on an operation described with reference to FIG. 3 to FIG. 4. Based on a distance between an external object located outside of the safety zone and a boundary of the safety zone, the processor may classify at least a portion of the boundary as a boundary of a first type. For example, the boundary of the first type may be set based on detecting an external object spaced apart from the boundary by a distance less than a designated distance. The boundary of the second type may be set when an external object closest to the boundary is spaced apart from the boundary by a distance greater than or equal to a designated distance. The processor may perform operation 1120 similarly to operation 520 of FIG. 5.

When a distance between the boundary of the first type of the safety zone and the wearable device and/or the designated body part is greater than or equal to the threshold distance (1120-No), the processor may maintain providing the virtual space of operation 1110. When a distance between the boundary of the first type of the safety zone and the wearable device and/or the designated body part is less than the threshold distance (1120-Yes), the processor may perform operation 1130.

Referring to FIG. 11, in operation 1130, the processor of the wearable device according to an embodiment may execute a function for notifying approach to the boundary of the first type. Operation 1130 may be performed similarly to operation 530 of FIG. 5. The processor may display, on the displays, a virtual object indicating the boundary of the first type, such as the virtual plane 721 of FIG. 7B.

Referring to FIG. 11, in operation 1140, the processor of the wearable device according to an embodiment may check or identify whether a virtual space is defined in an area beyond the boundary of the first type (or a location of the wearable device). For example, the processor may perform operation 1140 similarly to operation 850 of FIG. 8. When a virtual space is not defined at a location beyond the boundary of the first type, or a virtual space is not extended to a location beyond the boundary of the first type, or a virtual space does not include a location beyond the boundary of the first type (1140-No), the processor may maintain performing at least one of operations 1110 and 1120.

For example, when a virtual space is defined at a location beyond the boundary of the first type, or a virtual space is extended to a location beyond the boundary of the first type, or a virtual space includes a location beyond the boundary of the first type (1140-Yes), the processor may perform operation 1150.

Referring to FIG. 11, in operation 1150, the processor of the wearable device according to an embodiment may execute a function for changing a link between a safety zone and a virtual space. For example, the processor may execute a function for changing or rotating a virtual space and/or a coordinate system of the virtual space, without a movement of the wearable device (or independently of the movement of the wearable device). The function may include displaying a virtual object for checking whether to at least partially change the virtual space. The function may be started by performing the operation.

For example, while providing a first portion of a virtual space linked with the safety zone by using the displays, the processor may perform operation 1140 to check a second portion of the virtual space linked with an external space beyond the boundary of the first type. The second portion may be connected to the first portion or may be located next to the first portion in a coordinate system of the virtual space. The processor may provide or display, using the displays, a virtual object for checking whether to provide the second portion defined beyond the boundary of the first type by using the displays.

As described above, at a location adjacent to the boundary of the first type adjacent to an external object such as an obstacle, the wearable device may support an interaction with a virtual space (or a virtual object) linked beyond the boundary of the first type. In order to support the interaction, the wearable device may change a relationship (or mapping) between the safety zone and the virtual space such that at least a portion of the virtual space that may be provided using the displays includes another portion of the virtual object linked beyond the boundary of the first type while the wearable device is located within the safety zone. The function of operation 1150 may be referred to as reorientation and/or rearrangement.

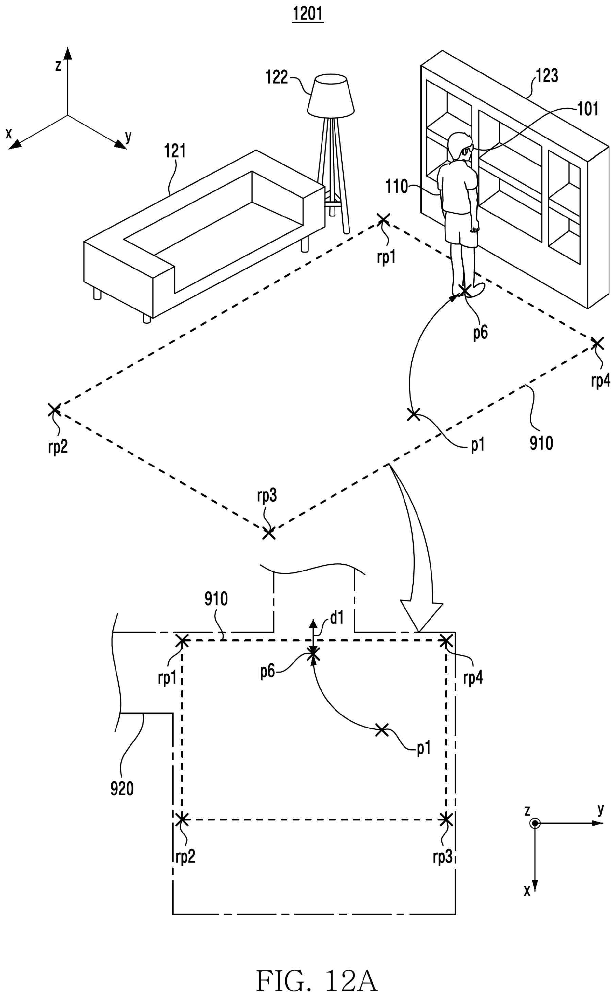

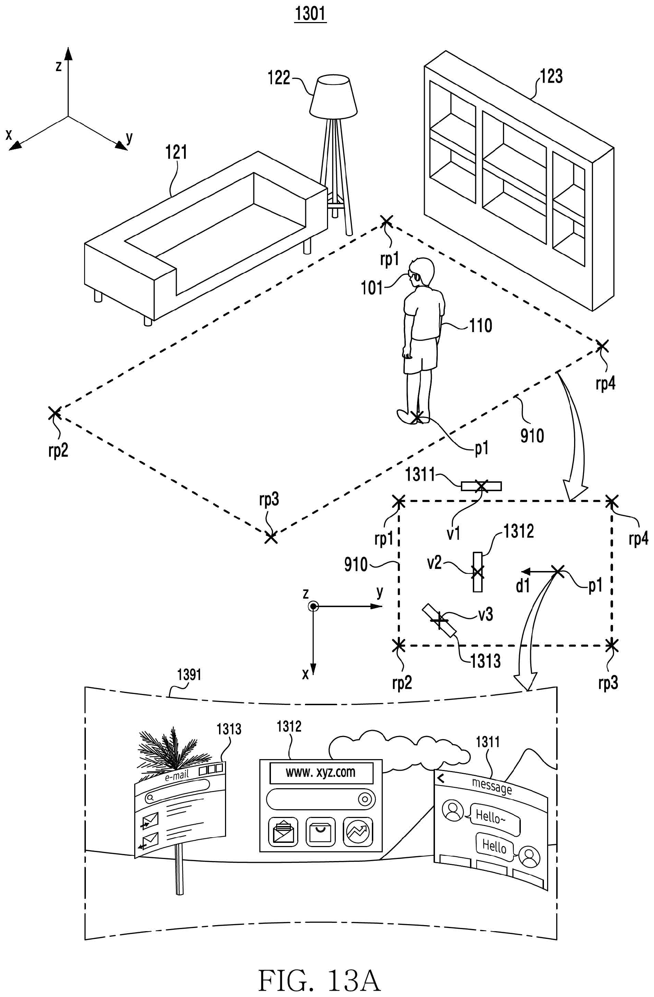

Hereinafter, exemplary screens displayed by a wearable device performing operations of FIG. 11 are described with reference to FIGS. 12A to 12C and FIGS. 13A to 13C.

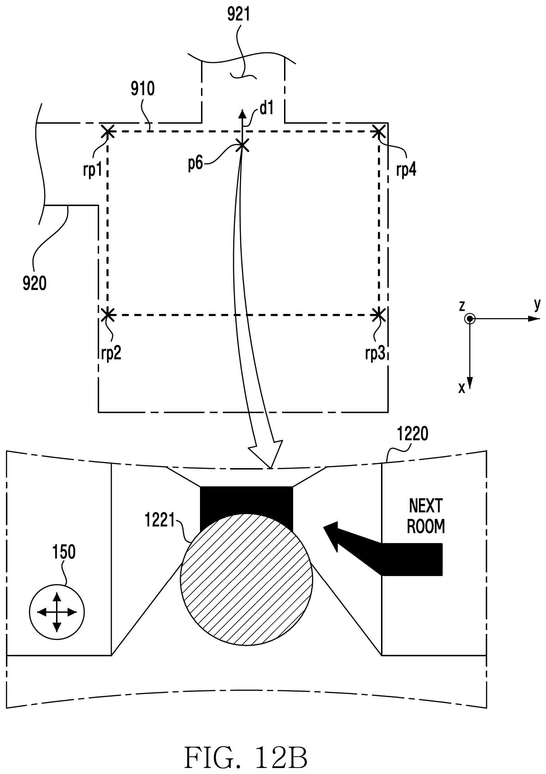

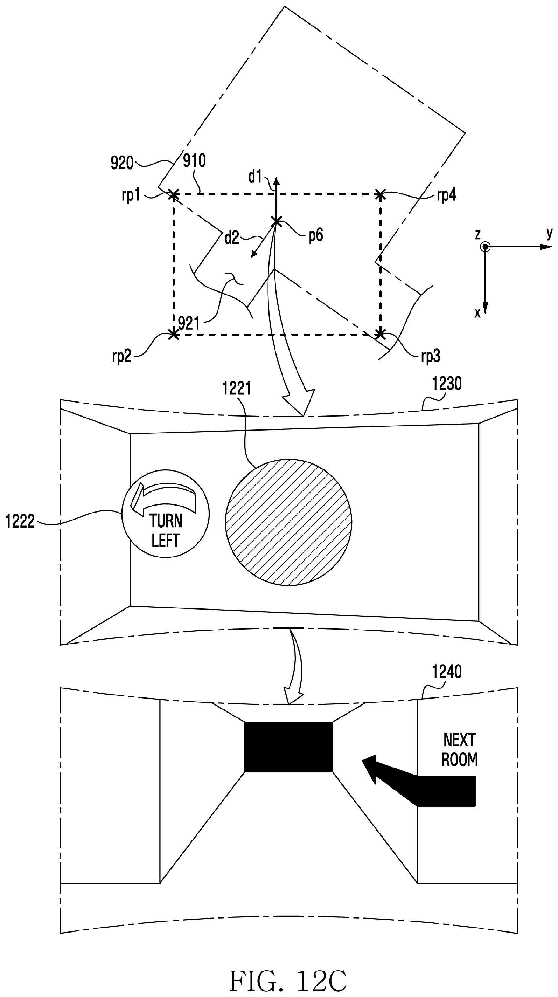

FIGS. 12A, 12B, and 12C illustrate exemplary operations of a wearable device 101 changing a relationship between a geographic location of the wearable device 101 and a virtual space 920. The wearable device 101 of FIG. 1 and/or FIG. 2, and/or the processor 210 of FIG. 2 may perform an operation of the wearable device 101 described with reference to FIGS. 12A to 12C. The operation of the wearable device 101 of FIGS. 12A to 12C may be performed based on execution of a program (e.g., the pass-through manager 253) of FIG. 2. The operation of the wearable device 101 described with reference to FIGS. 12A to 12C may be associated with at least one of operations of FIG. 3, FIG. 5, FIG. 8, and/or FIG. 11.

Referring to FIG. 12A, an exemplary state 1201 of the wearable device 101 located at the location p1 within the safety zone 910 is illustrated. In the state 1201, the user 110 wearing the wearable device 101 may move to a location p6. The wearable device 101 may check or detect a location of the wearable device 101 and/or the user 110, moved to the location p6 by using a sensor (e.g., the sensor 230 of FIG. 2). In the exemplary state 1201 in which the bookshelf 123 is adjacent to a portion of a boundary of the safety zone 910 (e.g., a portion of a boundary connecting vertices rp1 and rp4), the portion of the boundary adjacent to the location p6 may be determined as a boundary of the first type.

In the exemplary state 1201 of FIG. 12A, the wearable device 101 may visualize a virtual space, based on the location p6 and the direction d1 of the wearable device 101. Referring to FIG. 12B, in the state 1201 of FIG. 12A, an exemplary screen 1220 displayed on the displays is illustrated. In an embodiment in which a portion 912 of the virtual space 920 is defined beyond the safety zone 910 adjacent to the location p6, the wearable device 101 may display, in the screen 1220, an image and/or a video representing the portion 912 of the virtual space 920. Referring to FIG. 12B, at the location p6 adjacent to the boundary of the safety zone 910, the user 110 wearing the wearable device 101 may see, together with the portion 912 of the virtual space 920, a virtual object 1221 for notifying the boundary of the first type. The virtual object 1221 may correspond to the virtual plane 721 of FIG. 7B.

In an exemplary case of FIG. 12B, the user 110 viewing the portion 912 displayed on the displays may move to the outside of the safety zone 910 to move to the portion 912. When moving along the direction d1, the user 110 viewing the portion 912 may collide with an external object such as the bookshelf 123. In order to support moving to the portion 912 while preventing the collision, the wearable device 101 may support a function for changing mapping between the safety zone 910 and a virtual space 920. For example, while providing the virtual space 920 defined beyond the safety zone 910, based on identifying the wearable device 101 being moved toward a boundary of the safety zone 910 adjacent to an external object (e.g., the bookshelf 123), the wearable device 101 may provide, using the displays, a virtual object 150 for changing mapping between the safety zone 910 and the virtual space 920 (e.g., a placement location and/or a placement direction of the virtual space 920 with respect to the safety zone 910).

While displaying a screen 1220 of FIG. 12B, the wearable device 101 may receive an input associated with the virtual object 150. The input may be detected or identified based on a signal received from an external electronic device (e.g., the remote controller 410 of FIG. 4) connected to the wearable device 101. The input may be detected based on gaze information (e.g., a gaze location, indicating facing the virtual object 150) with respect to a user wearing the wearable device 101. The input may be detected based on a hand gesture of the user wearing the wearable device 101. The input may be detected based on a speech of the user wearing the wearable device 101.

In response to an input associated with the virtual object 150, the wearable device 101 may change mapping between the safety zone 910 and the virtual space 920. For example, the wearable device 101 may change mapping such that the portion 912 of the virtual space 920 defined beyond the safety zone 910 is moved into the safety zone 910. Referring to FIG. 12C, an exemplary state of the wearable device 101 after changing mapping between the safety zone 910 and the virtual space 920 in response to an input associated with the virtual object 150 is illustrated. For example, the wearable device 101 may rotate the virtual space 920 (or a coordinate system of the virtual space 920), based on a current location p6 of the wearable device 101. For example, the wearable device 101 may rotate the virtual space 920 such that a portion 921 of the virtual space 920, which was located at the front (e.g., the direction d1) of the wearable device 101, is located at a portion (e.g., a portion including a vertex rp2) of the safety zone 910 farthest from the location p6.

In order to rotate the virtual space 920, the wearable device 101 may calculate or identify a direction d2 of a portion farthest from the location p6 of the wearable device 101 within the safety zone 910. The wearable device 101 identifying the direction d2 may rotate the virtual space 920 such that the portion 921 of the virtual space 920 located in the direction d1 is located in the direction d2. Referring to FIG. 12C, based on the rotation, the portion 921 may be located at a portion of the safety zone 910 farthest from the location p6.

Although an exemplary operation of the wearable device 101 rotating the virtual space 920 is described, an embodiment is not limited thereto. The wearable device 101 may change mapping between the safety zone 910 and the virtual space 920 by executing a calculation model based on artificial intelligence. For example, by executing the calculation model, the wearable device 101 may determine or calculate a rotation angle of the virtual space 920. The wearable device 101 may change mapping between the safety zone 910 and the virtual space 920, by using a shape of a movable portion within the virtual space 920.

Referring to FIG. 12C, a screen 1230 displayed by the wearable device 101 changing a coordinate system of the virtual space 920 based on the safety zone 910 is illustrated. After changing mapping between the safety zone 910 and the virtual space 920 in response to the input associated with the virtual object 150, the wearable device 101 may display, on the displays, a virtual object 1222 indicating a direction of the portion 921 of the virtual space 920, which was defined beyond a boundary before changing the mapping. Referring to FIG. 12C, in the screen 1230, the wearable device 101 may display, in the screen 1230, the virtual object 1222 including text (e.g., "TURN LEFT") indicating the direction d2 of the portion 921. At the location p6 adjacent to the boundary of the safety zone, the wearable device 101 may continuously display the virtual object 1221 indicating the boundary.

Referring to FIG. 12C, a screen 1240 displayed by the wearable device 101 after the user 110 wearing the wearable device 101 rotates toward the direction d2 is illustrated. For example, the user 110 viewing the virtual object 1222 in the screen 1230 may rotate toward the direction d2. The wearable device 101 may display the screen 1240 on the displays, based on detecting the direction d2 of the wearable device 101, changed by the rotation. Since the wearable device 101 does not face the boundary of the safety zone 910, a virtual object (e.g., the virtual object 1221) representing the boundary may not be displayed in the screen 1240. For example, the user 110 may move, along the direction d2, to a location of the inside of the safety zone 910 corresponding to the portion 921 of the virtual space 920, before moving to the boundary of the safety zone 910.

As described above, according to an embodiment, the wearable device 101 may support accessing beyond a portion of the virtual space 920 mapped to the safety zone 910, when providing the virtual space 920 having a size larger than the safety zone 910. At the location p6 adjacent to the boundary of the safety zone 910, the wearable device 101 may display the virtual object 150 for accessing the portion 921 of the virtual space 920 defined beyond the boundary. In response to the input associated with the virtual object 150, the wearable device 101 may rotate or rearrange the virtual space 920. Based on the rotation and/or the rearrangement, within the safety zone 910 having a size smaller than the virtual space 920, the wearable device 101 may support accessibility to an entire virtual space 920.

Hereinafter, an exemplary operation of the wearable device 101 for supporting accessibility in the virtual space 920 wider than the safety zone 910 is described with reference to FIGS. 13A to 13C.

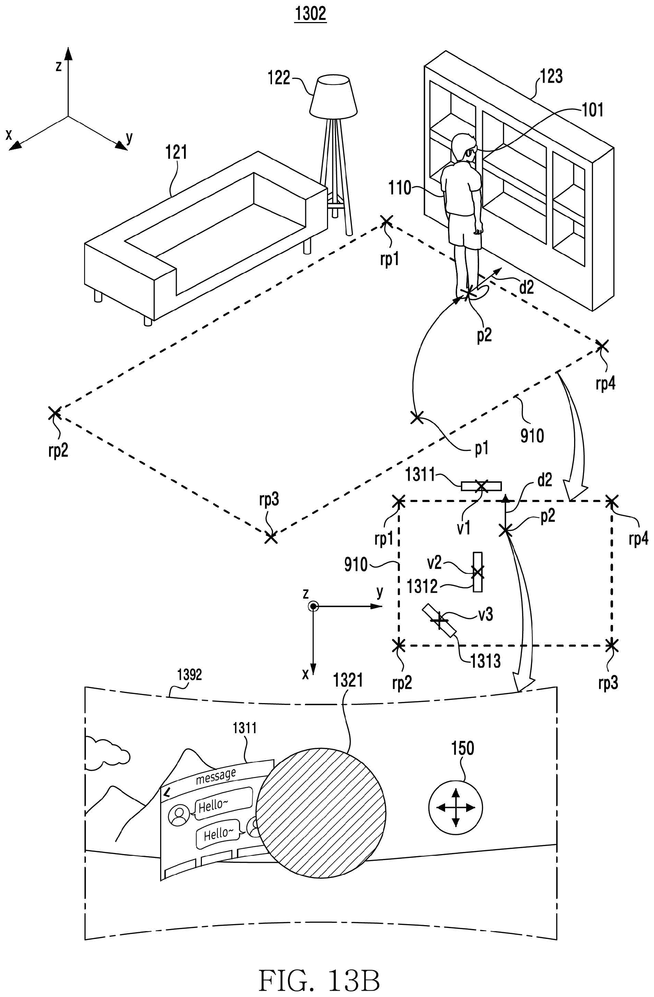

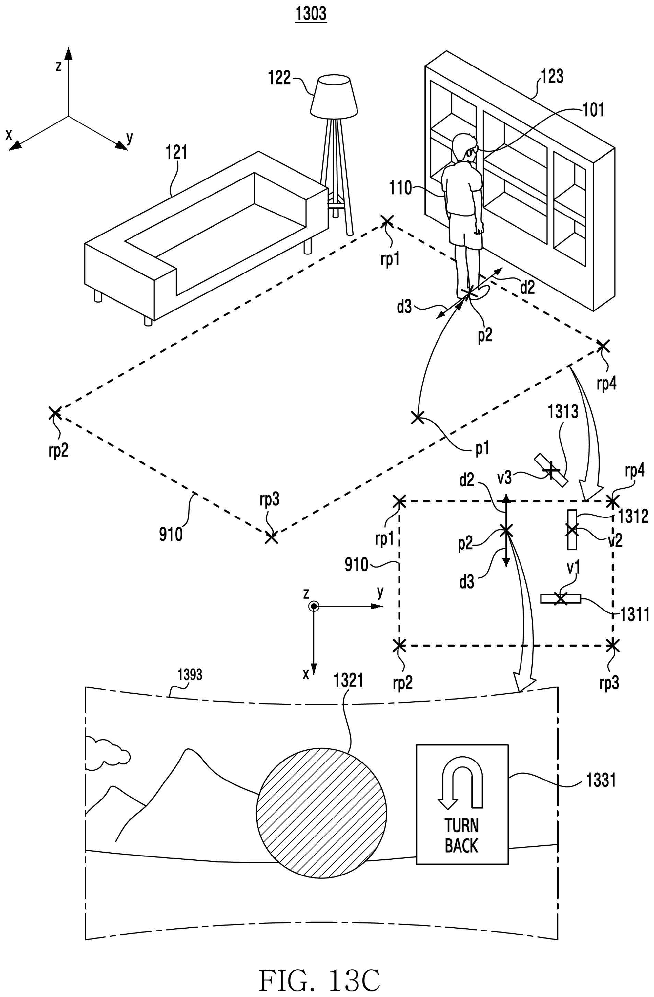

FIGS. 13A, 13B, and 13C illustrate exemplary operations of the wearable device 101 changing a relationship between a geographic location of the wearable device 101 and virtual objects (e.g., virtual objects 1311, 1312, and 1313). The wearable device 101 of FIG. 1 and/or FIG. 2, and/or the processor 210 of FIG. 2 may perform an operation of the wearable device 101 described with reference to FIGS. 13A to 13C. The operation of the wearable device 101 of FIGS. 13A to 13C may be performed based on execution of a program (e.g., the pass-through manager 253) of FIG. 2. The operation of the wearable device 101 described with reference to FIGS. 13A to 13C may be associated with at least one of operations of FIG. 3, FIG. 5, FIG. 8, and/or FIG. 11.

Referring to FIG. 13A, an exemplary state 1301 of the wearable device 101 located at the location p1 within the safety zone 910 is illustrated. In the state 1301, the wearable device 101 may provide virtual objects 1311, 1312, and 1313 respectively linked with locations v1, v2, and v3 of an external environment. For example, the wearable device 101 may display, on the displays, a screen 1391 based on the location p1 and the direction d1 of the wearable device 101. Referring to FIG. 13A, the virtual objects 1311, 1312, and 1313 may be displayed on each of the locations v1, v2, and v3 within the screen 1391 viewed from the location v1 along the direction d1.

For example, a size of a virtual space managed by the wearable device 101 may be different from a size of the safety zone 910. Referring to FIG. 13A, the virtual object 1311 may be linked to the location v1 outside of the safety zone 910. Referring to FIG. 13B, an exemplary state 1302 in which the user 110 moves toward the virtual object 1311 to interact with the virtual object 1311 is illustrated. In the state 1302, when the user 110 moves to the location p2 of the safety zone 910 adjacent to the virtual object 1311, the wearable device 101 may execute a function for notifying a boundary of the safety zone 910. Since a boundary of the safety zone 910 adjacent to the location p2 is a boundary of the first type adjacent to an external object such as the bookshelf 123, the wearable device 101 may display a screen 1392 including a virtual object 1321 for notifying the boundary of the first type. The virtual object 1321 may correspond to the virtual plane 721 of FIG. 7B.

Referring to FIG. 13B, at the location p2 adjacent to the boundary of the safety zone 910, the wearable device 101 may display, to the user 110 facing the direction d2, the screen 1392 including the virtual object 1321 representing the boundary. The wearable device 101 may identify the virtual object 1311 having the location v1 outside of the safety zone 910. The wearable device 101 displaying the screen 1392 including the virtual object 1311 may display the virtual object 150 configured to receive an input for moving the virtual object 1311 into the safety zone 910.

In response to an input associated with the virtual object 150, the wearable device 101 may change mapping between the safety zone 910 and the virtual space. The wearable device 101 may change the location v1 of at least one virtual object (e.g., the virtual object 1311) located in the safety zone 910 and the virtual space. For example, the wearable device 101 may change coordinates of the virtual object 1311 to move the virtual object 1311 located outside of the safety zone 910 to the inside of the safety zone 910.

Referring to FIG. 13C, an exemplary state 1303 in which the locations v1, v2, and v3 of virtual objects 1311, 1312, and 1313 are changed in response to an input associated with the virtual object 150 is illustrated. In the state 1303 of FIG. 13C, the wearable device 101 may rotate the virtual objects 1311, 1312, and 1313, based on a current location p2 of the wearable device 101. Based on the rotation, the virtual object 1311, which was located outside of the safety zone 910, may be moved into the safety zone 910. After moving the virtual object 1311, the wearable device 101 may display, in the screen 1393, a virtual object 1331 including text (e.g., "TURN BACK") indicating a location and/or a direction of the virtual object 1311 such that the user 110 viewing the direction d2 may rotate toward the virtual object 1311.

For example, the screen 1393 may include a virtual space provided by the wearable device 101, the virtual object 1321 for notifying a boundary of the first type, and the virtual object 1331 for guiding a location of the virtual object 1311. The user 110 viewing the virtual object 1331 may rotate toward the direction d3 inside of the safety zone 910. The user 110 rotating toward the direction d3 may view the virtual object 1311 again. Since the virtual object 1311 is located inside of the safety zone 910, the user 110 may move toward the virtual object 1311 again. The wearable device 101 may support interaction between the virtual object 1311 and the user 110 at the inside of the safety zone 910.

As described above, according to an embodiment, the wearable device 101 may provide a UI associated with a virtual space at a boundary of the safety zone 910 or at the outside of the safety zone 910, to enhance accessibility with respect to a virtual space defined wider than the safety zone 910. For example, the wearable device 101 may conditionally maintain providing the virtual space even after being moved to the outside of the safety zone 910. For example, the wearable device 101 may change (e.g., rotate) a coordinate system of the virtual space at a location adjacent to the boundary of the safety zone 910 such that the user changes a portion of the virtual space mapped to the safety zone 910.

Hereinafter, an exemplary structure of the wearable device 101 of FIG. 1 and/or FIG. 2 is illustrated with reference to FIG. 14A, FIG. 14B, FIG. 15A, and FIG. 15B. The wearable device 1400 of FIG. 14A to FIG. 14B and the wearable device 1500 of FIG. 15A to FIG. 15B may be an example of the wearable device 101 of FIG. 1 and/or FIG. 2.

FIG. 14A illustrates an example of a perspective view of a wearable device according to an embodiment. According to an embodiment, a wearable device 1400 may have a form of glasses that is wearable on a body part (e.g., head) of a user. The wearable device 1400 may include a head-mounted display (HMD). For example, a housing of the wearable device 1400 may include a flexible material such as rubber and/or silicone having a form closely attached to a portion of the user's head (for example, a portion of a face surrounding two eyes). For example, the housing of the wearable device 1400 may include one or more straps able to be twined around the user's head, and/or one or more temples attachable to ears of the head.

Referring to FIG. 14A, according to an embodiment, the wearable device 1400 may include at least one display 1450 and a frame supporting the at least one display 1450.

According to an embodiment, the wearable device 1400 may be wearable on a portion of the user's body. The wearable device 1400 may provide augmented reality (AR), virtual reality (VR), or mixed reality (MR) combining the augmented reality and the virtual reality to a user wearing the wearable device 1400. For example, the wearable device 1400 may display a virtual reality image provided from at least one optical device 1482 and 1484 of FIG. 14B on at least one display 1450, in response to a user's preset gesture obtained through a motion recognition camera 1460-2 and 1460-3 of FIG. 14B.

According to an embodiment, the at least one display 1450 may provide visual information to a user. For example, the at least one display 1450 may include a transparent or translucent lens. The at least one display 1450 may include a first display 1450-1 and/or a second display 1450-2 spaced apart from the first display 1450-1. For example, the first display 1450-1 and the second display 1450-2 may be disposed at positions corresponding to the user's left and right eyes, respectively.

Referring to FIG. 14B, the at least one display 1450 may provide visual information transmitted through a lens included in the at least one display 1450 from ambient light to a user and other visual information distinguished from the visual information14. The lens may be formed based on at least one of a fresnel lens, a pancake lens, or a multi-channel lens. For example, the at least one display 1450 may include a first surface 1431 and a second surface 1432 opposite to the first surface 1431. A display area may be formed on the second surface 1432 of at least one display 1450. When the user wears the wearable device 1400, ambient light may be transmitted to the user by being incident on the first surface 1431 and being penetrated through the second surface 1432. For another example, the at least one display 1450 may display an augmented reality image in which a virtual reality image provided by the at least one optical device 1482 and 1484 is combined with a reality screen transmitted through ambient light, on a display area formed on the second surface 1432.

According to an embodiment, the at least one display 1450 may include at least one waveguide 1433 and 1434 that transmits light transmitted from the at least one optical device 1482 and 1484 by diffracting to the user. The at least one waveguide 1433 and 1434 may be formed based on at least one of glass, plastic, or polymer. A nano pattern may be formed on at least a portion of the outside or inside of the at least one waveguide 1433 and 1434. The nano pattern may be formed based on a grating structure having a polygonal or curved shape. Light incident to an end of the at least one waveguide 1433 and 1434 may be propagated to another end of the at least one waveguide 1433 and 1434 by the nano pattern. The at least one waveguide 1433 and 1434 may include at least one of at least one diffraction element (e.g., a diffractive optical element (DOE), a holographic optical element (HOE)), and a reflection element (e.g., a reflection mirror). For example, the at least one waveguide 1433 and 1434 may be disposed in the wearable device 1400 to guide a screen displayed by the at least one display 1450 to the user's eyes. For example, the screen may be transmitted to the user's eyes based on total internal reflection (TIR) generated in the at least one waveguide 1433 and 1434.

The wearable device 1400 may analyze an object included in a real image collected through a photographing camera 1460-4, combine with a virtual object corresponding to an object that becomes a subject of augmented reality provision among the analyzed object, and display on the at least one display 1450. The virtual object may include at least one of text and images for various information associated with the object included in the real image. The wearable device 1400 may analyze the object based on a multi-camera such as a stereo camera. For the object analysis, the wearable device 1400 may execute space recognition (e.g., simultaneous localization and mapping (SLAM)) using the multi-camera and/or time-of-flight (ToF). The user wearing the wearable device 1400 may watch an image displayed on the at least one display 1450.

According to an embodiment, a frame may be configured with a physical structure in which the wearable device 1400 may be worn on the user's body. According to an embodiment, the frame may be configured so that when the user wears the wearable device 1400, the first display 1450-1 and the second display 1450-2 may be positioned corresponding to the user's left and right eyes. The frame may support the at least one display 1450. For example, the frame may support the first display 1450-1 and the second display 1450-2 to be positioned at positions corresponding to the user's left and right eyes.

Referring to FIG. 14A, according to an embodiment, the frame may include an area 1420 at least partially in contact with the portion of the user's body in case that the user wears the wearable device 1400. For example, the area 1420 of the frame in contact with the portion of the user's body may include an area in contact with a portion of the user's nose, a portion of the user's ear, and a portion of the side of the user's face that the wearable device 1400 contacts. According to an embodiment, the frame may include a nose pad 1410 that is contacted on the portion of the user's body. When the wearable device 1400 is worn by the user, the nose pad 1410 may be contacted on the portion of the user's nose. The frame may include a first temple 1404 and a second temple 1405, which are contacted on another portion of the user's body that is distinct from the portion of the user's body.

For example, the frame may include a first rim 1401 surrounding at least a portion of the first display 1450-1, a second rim 1402 surrounding at least a portion of the second display 1450-2, a bridge 1403 disposed between the first rim 1401 and the second rim 1402, a first pad 1411 disposed along a portion of the edge of the first rim 1401 from one end of the bridge 1403, a second pad 1412 disposed along a portion of the edge of the second rim 1402 from the other end of the bridge 1403, the first temple 1404 extending from the first rim 1401 and fixed to a portion of the wearer's ear, and the second temple 1405 extending from the second rim 1402 and fixed to a portion of the ear opposite to the ear. The first pad 1411 and the second pad 1412 may be in contact with the portion of the user's nose, and the first temple 1404 and the second temple 1405 may be in contact with a portion of the user's face and the portion of the user's ear. The temples 1404 and 1405 may be rotatably connected to the rim through hinge units 1406 and 1407 of FIG. 14B. The first temple 1404 may be rotatably connected with respect to the first rim 1401 through the first hinge unit 1406 disposed between the first rim 1401 and the first temple 1404. The second temple 1405 may be rotatably connected with respect to the second rim 1402 through the second hinge unit 1407 disposed between the second rim 1402 and the second temple 1405. According to an embodiment, the wearable device 1400 may identify an external object (e.g., a user's fingertip) touching the frame and/or a gesture performed by the external object by using a touch sensor, a grip sensor, and/or a proximity sensor formed on at least a portion of the surface of the frame.

According to an embodiment, the wearable device 1400 may include hardware (e.g., hardware described above based on the block diagram of FIG. 2) that performs various functions. For example, the hardware may include a battery module 1470, an antenna module 1475, the at least one optical device 1482 and 1484, speakers (e.g., speakers 1455-1 and 1455-2), a microphone (e.g., microphones 1465-1, 1465-2, and 1465-3), a light emitting module, and/or a printed circuit board (PCB) 1490 (e.g., printed circuit board). Various hardware components may be disposed in the frame.

According to an embodiment, the microphone (e.g., the microphones 1465-1, 1465-2, and 1465-3) of the wearable device 1400 may obtain a sound signal, by being disposed on at least a portion of the frame. The first microphone 1465-1 disposed on the bridge 1403, the second microphone 1465-2 disposed on the second rim 1402, and the third microphone 1465-3 disposed on the first rim 1401 are illustrated in FIG. 14B, but the number and disposition of the microphone 1465 are not limited to an embodiment of FIG. 14B. In case that the number of the microphone 1465 included in the wearable device 1400 is two or more, the wearable device 1400 may identify a direction of the sound signal by using a plurality of microphones disposed on different portions of the frame.

According to an embodiment, the at least one optical device 1482 and 1484 may project a virtual object on the at least one display 1450 in order to provide various image information to the user. For example, the at least one optical device 1482 and 1484 may be a projector. The at least one optical device 1482 and 1484 may be disposed adjacent to the at least one display 1450 or may be included in the at least one display 1450 as a portion of the at least one display 1450. According to an embodiment, the wearable device 1400 may include a first optical device 1482 corresponding to the first display 1450-1, and a second optical device 1484 corresponding to the second display 1450-2. For example, the at least one optical device 1482 and 1484 may include the first optical device 1482 disposed at a periphery of the first display 1450-1 and the second optical device 1484 disposed at a periphery of the second display 1450-2. The first optical device 1482 may transmit light to the first waveguide 1433 disposed on the first display 1450-1, and the second optical device 1484 may transmit light to the second waveguide 1434 disposed on the second display 1450-2.

In an embodiment, a camera 1460 may include the photographing camera 1460-4, an eye tracking camera (ET CAM) 1460-1, and/or the motion recognition camera 1460-2 and 1460-3. The photographing camera 1460-4, the eye tracking camera 1460-1, and the motion recognition camera 1460-2 and 1460-3 may be disposed at different positions on the frame and may perform different functions. The eye tracking camera 1460-1 may output data indicating a position of eye or a gaze of the user wearing the wearable device 1400. For example, the wearable device 1400 may detect the gaze from an image including the user's pupil obtained through the eye tracking camera 1460-1.

The wearable device 1400 may identify an object (e.g., a real object, and/or a virtual object) focused by the user, by using the user's gaze obtained through the eye tracking camera 1460-1. The wearable device 1400 identifying the focused object may execute a function (e.g., gaze interaction) for interaction between the user and the focused object. The wearable device 1400 may represent a portion corresponding to eye of an avatar indicating the user in the virtual space, by using the user's gaze obtained through the eye tracking camera 1460-1. The wearable device 1400 may render an image (or a screen) displayed on the at least one display 1450, based on the position of the user's eye.

For example, visual quality (e.g., resolution, brightness, saturation, grayscale, and pixels per inch (PPI)) of a first area related to the gaze within the image and visual quality of a second area distinguished from the first area may be different. The wearable device 1400 may obtain an image having the visual quality of the first area matching the user's gaze and the visual quality of the second area by using foveated rendering. For example, when the wearable device 1400 supports an iris recognition function, user authentication may be performed based on iris information obtained using the eye tracking camera 1460-1. An example in which the eye tracking camera 1460-1 is disposed toward the user's right eye is illustrated in FIG. 14B, but the embodiment is not limited thereto, and the eye tracking camera 1460-1 may be disposed alone toward the user's left eye or may be disposed toward two eyes.

In an embodiment, the photographing camera 1460-4 may photograph a real image or background to be matched with a virtual image in order to implement the augmented reality or mixed reality content. The photographing camera 1460-4 may be used to obtain an image having a high resolution based on a high resolution (HR) or a photo video (PV). The photographing camera 1460-4 may photograph an image of a specific object existing at a position viewed by the user and may provide the image to the at least one display 1450. The at least one display 1450 may display one image in which a virtual image provided through the at least one optical device 1482 and 1484 is overlapped with information on the real image or background including an image of the specific object obtained by using the photographing camera 1460-4. The wearable device 1400 may compensate for depth information (e.g., a distance between the wearable device 1400 and an external object obtained through a depth sensor), by using an image obtained through the photographing camera 1460-4. The wearable device 1400 may perform object recognition through an image obtained using the photographing camera 1460-4. The wearable device 1400 may perform a function (e.g., auto focus (AF)) of focusing an object (or subject) within an image and/or an optical image stabilization (OIS) function (e.g., an anti-shaking function) by using the photographing camera 1460-4. While displaying a screen representing a virtual space on the at least one display 1450, the wearable device 1400 may perform a pass through function for displaying an image obtained through the photographing camera 1460-4 overlapping at least a portion of the screen. In an embodiment, the photographing camera 1460-4 may be disposed on the bridge 1403 disposed between the first rim 1401 and the second rim 1402.

The eye tracking camera 1460-1 may implement a more realistic augmented reality by matching the user's gaze with the visual information provided on the at least one display 1450, by tracking the gaze of the user wearing the wearable device 1400. For example, when the user looks at the front, the wearable device 1400 may naturally display environment information associated with the user's front on the at least one display 1450 at a position where the user is positioned. The eye tracking camera 1460-1 may be configured to capture an image of the user's pupil in order to determine the user's gaze. For example, the eye tracking camera 1460-1 may receive gaze detection light reflected from the user's pupil and may track the user's gaze based on the position and movement of the received gaze detection light. In an embodiment, the eye tracking camera 1460-1 may be disposed at a position corresponding to the user's left and right eyes. For example, the eye tracking camera 1460-1 may be disposed in the first rim 1401 and/or the second rim 1402 to face the direction in which the user wearing the wearable device 1400 is positioned.

The motion recognition camera 1460-2 and 1460-3 may provide a specific event to the screen provided on the at least one display 1450 by recognizing the movement of the whole or portion of the user's body, such as the user's torso, hand, or face. The motion recognition camera 1460-2 and 1460-3 may obtain a signal corresponding to motion by recognizing the user's motion (e.g., gesture recognition), and may provide a display corresponding to the signal to the at least one display 1450. The processor may identify a signal corresponding to the operation and may perform a preset function based on the identification. The motion recognition camera 1460-2 and 1460-3 may be used to perform SLAM for 6 degrees of freedom pose (6 dof pose) and/or a space recognition function using a depth map. The processor may perform a gesture recognition function and/or an object tracking function, by using the motion recognition camera 1460-2 and 1460-3. In an embodiment, the motion recognition camera 1460-2 and camera 1460-3 may be disposed on the first rim 1401 and/or the second rim 1402.

The camera 1460 included in the wearable device 1400 are not limited to the above-described eye tracking camera 1460-1 and the motion recognition camera 1460-2 and 1460-3. For example, the wearable device 1400 may identify an external object included in a field of view (FoV) by using a camera disposed toward the user's FoV. The wearable device 1400 identifying the external object may be performed based on a sensor for identifying a distance between the wearable device 1400 and the external object, such as a depth sensor and/or a time of flight (ToF) sensor. The camera 1460 disposed toward the FoV may support an autofocus (AF) function and/or an optical image stabilization (OIS) function. For example, in order to obtain an image including a face of the user wearing the wearable device 1400, the wearable device 1400 may include the camera 1460 (e.g., a face tracking (FT) camera) disposed toward the face.

Although not illustrated, the wearable device 1400 according to an embodiment may further include a light source (e.g., LED) that emits light toward a subject (e.g., user's eyes, face, and/or an external object in the FoV) photographed by using the camera 1460. The light source may include an LED having an infrared wavelength. The light source may be disposed on at least one of the frame, and the hinge units 1406 and 1407.

According to an embodiment, the battery module 1470 may supply power to electronic components of the wearable device 1400. In an embodiment, the battery module 1470 may be disposed in the first temple 1404 and/or the second temple 1405. For example, the battery module 1470 may be a plurality of battery modules 1470. The plurality of battery modules 1470, respectively, may be disposed on each of the first temple 1404 and the second temple 1405. In an embodiment, the battery module 1470 may be disposed at an end of the first temple 1404 and/or the second temple 1405.

The antenna module 1475 may transmit the signal or power to the outside of the wearable device 1400 or may receive the signal or power from the outside. In an embodiment, the antenna module 1475 may be disposed in the first temple 1404 and/or the second temple 1405. For example, the antenna module 1475 may be disposed close to one surface of the first temple 1404 and/or the second temple 1405.

The speaker 1455 may output a sound signal to the outside of the wearable device 1400. A sound output module may be referred to as a speaker. In an embodiment, the speaker 1455 may be disposed in the first temple 1404 and/or the second temple 1405 in order to be disposed adjacent to the ear of the user wearing the wearable device 1400. For example, the speaker 1455 may include a second speaker 1455-2 disposed adjacent to the user's left ear by being disposed in the first temple 1404, and a first speaker 1455-1 disposed adjacent to the user's right ear by being disposed in the second temple 1405.

The light emitting module (not illustrated) may include at least one light emitting element. The light emitting module may emit light of a color corresponding to a specific state or may emit light through an operation corresponding to the specific state in order to visually provide information on a specific state of the wearable device 1400 to the user. For example, when the wearable device 1400 requires charging, it may emit red light at a constant cycle. In an embodiment, the light emitting module may be disposed on the first rim 1401 and/or the second rim 1402.

Referring to FIG. 14B, according to an embodiment, the wearable device 1400 may include the printed circuit board (PCB) 1490. The PCB 1490 may be included in at least one of the first temple 1404 or the second temple 1405. The PCB 1490 may include an interposer disposed between at least two sub PCBs. On the PCB 1490, one or more hardware (e.g., hardware illustrated by different blocks of FIG. 4) included in the wearable device 1400 may be disposed. The wearable device 1400 may include a flexible PCB (FPCB) for interconnecting the hardware.

According to an embodiment, the wearable device 1400 may include at least one of a gyro sensor, a gravity sensor, and/or an acceleration sensor for detecting the posture of the wearable device 1400 and/or the posture of a body part (e.g., a head) of the user wearing the wearable device 1400. Each of the gravity sensor and the acceleration sensor may measure gravity acceleration, and/or acceleration based on preset 3-dimensional axes (e.g., x-axis, y-axis, and z-axis) perpendicular to each other. The gyro sensor may measure angular velocity of each of preset 3-dimensional axes (e.g., x-axis, y-axis, and z-axis). At least one of the gravity sensor, the acceleration sensor, and the gyro sensor may be referred to as an inertial measurement unit (IMU). According to an embodiment, the wearable device 1400 may identify the user's motion and/or gesture performed to execute or stop a specific function of the wearable device 1400 based on the IMU.

FIGS. 15A to 15B illustrate an example of an exterior of a wearable device according to an embodiment. The wearable device 1500 of FIGS. 15A to 15B may include at least a portion of the hardware of the wearable device 1400 described with reference to FIGS. 14A and/or 14B. According to an embodiment, an example of an exterior of a first surface 1510 of a housing of the wearable device 1500 may be illustrated in FIG. 15A, and an example of an exterior of a second surface 1520 opposite to the first surface 1510 may be illustrated in FIG. 15B.

Referring to FIG. 15A, according to an embodiment, the first surface 1510 of the wearable device 1500 may have an attachable shape on the user's body part (e.g., the user's face). Although not illustrated, the wearable device 1500 may further include a strap for being fixed on the user's body part, and/or one or more temples (e.g., the first temple 1404 and/or the second temple 1405 of FIGS. 14A to 14B). A first display 1450-1 for outputting an image to the left eye among the user's two eyes and a second display 1450-2 for outputting an image to the right eye among the user's two eyes may be disposed on the first surface 1510. The wearable device 1500 may further include rubber or silicon packing, which are formed on the first surface 1510, for preventing interference by light (e.g., ambient light) different from the light emitted from the first display 1450-1 and the second display 1450-2.

According to an embodiment, the wearable device 1500 may include a camera 1460-1 for photographing and/or tracking two eyes of the user adjacent to each of the first display 1450-1 and the second display 1450-2. The camera 1460-1 may be referred to as the gaze tracking camera 1460-1 of FIG. 14B. According to an embodiment, the wearable device 1500 may include cameras 1460-5 and 1460-6 for photographing and/or recognizing the user's face. The cameras 1460-5 and 1460-6 may be referred to as a FT camera. The wearable device 1500 may control an avatar representing a user in a virtual space, based on a motion of the user's face identified using the cameras 1460-5 and 1460-6. For example, the wearable device 1500 may change a texture and/or a shape of a portion (e.g., a portion of an avatar representing a human face) of the avatar, by using information obtained by the cameras 1460-5 and 1460-6 (e.g., the FT camera) and representing the facial expression of the user wearing the wearable device 1500.

Referring to FIG. 15B, a camera (e.g., cameras 1460-7, 1460-8, 1460-9, 1460-10, 1460-11, and 1460-12), and/or a sensor (e.g., the depth sensor 1530) for obtaining information associated with the external environment of the wearable device 1500 may be disposed on the second surface 1520 opposite to the first surface 1510 of FIG. 15A. For example, the cameras 1460-7, 1460-8, 1460-9, and 1460-10 may be disposed on the second surface 1520 in order to recognize an external object. The cameras 1460-7, 1460-8, 1460-9, and 1460-10 of FIG. 15 may correspond to as the motion recognition cameras 1460-2 and 1460-3 of FIG. 14B.

For example, by using cameras 1460-11 and 1460-12, the wearable device 1500 may obtain an image and/or video to be transmitted to each of the user's two eyes. The camera 1460-11 may be disposed on the second surface 1520 of the wearable device 1500 to obtain an image to be displayed through the second display 1450-2 corresponding to the right eye among the two eyes. The camera 1460-12 may be disposed on the second surface 1520 of the wearable device 1500 to obtain an image to be displayed through the first display 1450-1 corresponding to the left eye among the two eyes. The cameras 1460-11 and 1460-12 may correspond to as the photographing camera 1460-4 of FIG. 14B.

According to an embodiment, the wearable device 1500 may include the depth sensor 1530 disposed on the second surface 1520 in order to identify a distance between the wearable device 1500 and the external object. By using the depth sensor 1530, the wearable device 1500 may obtain spatial information (e.g., a depth map) about at least a portion of the FoV of the user wearing the wearable device 1500. Although not illustrated, a microphone for obtaining sound outputted from the external object may be disposed on the second surface 1520 of the wearable device 1500. The number of microphones may be one or more according to embodiments.

In an embodiment, in response to a movement of a wearable device approaching a boundary of a safety zone set to provide a virtual space, a method for notifying the movement of the wearable device approaching the boundary may be required. As described above, according to an embodiment, a wearable device (e.g., the wearable device 101 of FIG. 1) may include displays (e.g., the display 220 of FIG. 2) configured to be positioned toward eyes of a user wearing the wearable device, at least one camera (e.g., the camera 225 of FIG. 2) configured to be positioned toward an external environment, at least one sensor (e.g., the sensor 230 of FIG. 2) configured to obtain information with respect to the external environment, memory (e.g., the memory 215 of FIG. 2), comprising one or more storage mediums, storing instructions, and at least one processor (e.g., the processor 210 of FIG. 2) including processing circuitry. The instructions, when executed by the at least one processor individually and/or collectively, may cause the wearable device to set a safety zone (e.g., the safety zone 130 of FIG. 1, the safety zone 910 of FIGS. 9A to 9C) with respect to a space of an external environment for safety of the user wearing the wearable device. The instructions, when executed by the at least one processor individually and/or collectively, may cause the wearable device to provide a virtual space (e.g., the virtual space 920 of FIGS. 9A to 9C) using the displays. The instructions, when executed by the at least one processor individually and/or collectively, may cause the wearable device to, while the virtual space is provided beyond the safety zone at a first location of the wearable device within the safety zone, based on identifying the wearable device being moved outside of the safety zone, provide, using the displays, both the virtual space and a video with respect to the external environment being obtained using the at least one camera to highlight the external environment with respect to the virtual space. The instructions, when executed by the at least one processor individually and/or collectively, may cause the wearable device to, while the virtual space is provided at a second location of the wearable device within the safety zone, based on identifying the wearable device being moved outside of the safety zone, cease providing the virtual space. According to an embodiment, the wearable device may continuously provide the virtual space, based on whether the virtual space is defined beyond the safety zone when the wearable device is moved outside of the safety zone, while providing the virtual space within the safety zone for safety of the user. The wearable device may maintain providing a user experience associated with the virtual space, based on a virtual space defined outside of the safety zone, after the wearable device is moved outside of the safety zone. The wearable device may maintain the user experience associated with the virtual space, according to a state of the external environment outside of the safety zone.

For example, the instructions, when executed by the at least one processor individually and/or collectively, may cause the wearable device to, while providing the virtual space defined beyond the safety zone, display a virtual object to check whether to cease providing the virtual space, based on identifying the wearable device being moved outside of the safety zone.

For example, the instructions, when executed by the at least one processor individually and/or collectively, may cause the wearable device to detect a geographic location of the wearable device using the at least one sensor and/or the at least one camera. The instructions, when executed by the at least one processor individually and/or collectively, may cause the wearable device to check whether the wearable device is moved beyond the safety zone by comparing the safety zone and the geographic location.

For example, the instructions, when executed by the at least one processor individually and/or collectively, may cause the wearable device to provide, using the displays, the video being obtained using the at least one camera, based on identifying the wearable device being moved outside of the safety zone, while providing the virtual space defined inside of the safety zone.

For example, the instructions, when executed by the at least one processor individually and/or collectively, may cause the wearable device to provide, using the displays, a virtual plane representing the portion to which the wearable device approaches, based on identifying the wearable device being moved toward a portion of a boundary of the safety zone within the safety zone.

For example, the instructions, when executed by the at least one processor individually and/or collectively, may cause the wearable device to provide, using the displays, the virtual plane having a color determined using information indicating whether the user is able to move outside of the safety zone through the portion.

For example, the instructions, when executed by the at least one processor individually and/or collectively, may cause the wearable device to, while providing the virtual space defined beyond the safety zone, provide, using the displays, a virtual object to change mapping between the safety zone and the virtual space, based on identifying the wearable device being moved toward a boundary of the safety zone adjacent to an external object. The instructions, when executed by the at least one processor individually and/or collectively, may cause the wearable device to change the mapping such that a portion of the virtual space defined beyond the safety zone is moved inside of the safety zone, in response to an input associated with the virtual object.

For example, the instructions, when executed by the at least one processor individually and/or collectively, may cause the wearable device to, after changing the mapping in response to the input, display, using the displays, a virtual object indicating a direction of the portion of the virtual space defined beyond the boundary before changing the mapping.

For example, the instructions, when executed by the at least one processor individually and/or collectively, may cause the wearable device to increase a transparency of the virtual space to highlight the external environment with respect to the virtual space. For example, the instructions, when executed by the at least one processor individually and/or collectively, may cause the wearable device to increase a size of an area within the display in which the video is displayed to highlight the external environment with respect to the virtual space.

For example, the instructions, when executed by the at least one processor individually and/or collectively, may cause the wearable device to, while providing an area in the display in which the video is displayed, increase a size of the area according to a speed indicated by an attribute of at least a portion of the safety zone adjacent to the wearable device to highlight the external environment with respect to the virtual space.

As described above, in an embodiment, a non-transitory computer-readable storage medium storing instructions may be provided. The instructions, when executed by the wearable device with displays configured to be positioned toward eyes of a user, at least one camera configured to be positioned toward an external environment, and at least one sensor configured to obtain information with respect to the external environment, may cause the wearable device to set a safety zone with respect to a space of the external environment for safety of the user wearing the wearable device. The instructions, when executed by the wearable device, may cause the wearable device to provide a virtual space using the displays. The instructions, when executed by the wearable device, may cause the wearable device to, while the virtual space is provided beyond the safety zone at a first location of the wearable device within the safety zone, based on identifying the wearable device being moved outside of the safety zone, provide, using the displays, both the virtual space and a video with respect to the external environment being obtained using the at least one camera by increasing a transparency of the virtual space. The instructions, when executed by the wearable device, may cause the wearable device to, while the virtual space is provided at a second location of the wearable device within the safety zone, based on identifying the wearable device being moved outside of the safety zone, cease providing the virtual space.

For example, the instructions, when executed by the wearable device, may cause the wearable device to display a virtual object to check whether to cease providing the virtual space, based on identifying the wearable device being moved outside of the safety zone, while providing the virtual space defined beyond the safety zone.

For example, the instructions, when executed by the wearable device, may cause the wearable device to detect a geographic location of the wearable device using the at least one sensor and/or the at least one camera. The instructions, when executed by the wearable device, may cause the wearable device to check whether the wearable device is moved beyond the safety zone by comparing the safety zone and the geographic location.

For example, the instructions, when executed by the wearable device, may cause the wearable device to provide, using the displays, the video being obtained using the at least one camera based on identifying the wearable device being moved outside of the safety zone while providing the virtual space defined within the safety zone.

For example, the instructions, when executed by the wearable device, may cause the wearable device to provide, using the displays, a virtual plane representing the portion to which the wearable device approaches, based on identifying the wearable device being moved toward a portion of a boundary of the safety zone within the safety zone.

For example, the instructions, when executed by the wearable device, may cause the wearable device to provide, using the displays, a virtual plane having a color determined using information indicating whether the user is able to move outside of the safety zone through the portion.

For example, the instructions, when executed by the wearable device, may cause the wearable device to, while providing the virtual space defined beyond the safety zone, based on identifying the wearable device being moved toward a boundary of the safety zone adjacent to an external object, provide, using the displays, a virtual object to change mapping between the safety zone and the virtual space. The instructions, when executed by the wearable device, may cause the wearable device to change the mapping such that a portion of the virtual space defined beyond the safety zone is moved into the safety zone, in response to an input associated with the virtual object.

For example, the instructions, when executed by the wearable device, may cause the wearable device to display, using the displays, a virtual object indicating a direction of the portion of the virtual space defined beyond the boundary before changing the mapping, after changing the mapping in response to the input.

As described above, in an embodiment, a method of a wearable device may be provided. The wearable device may include displays configured to be positioned toward eyes of a user wearing the wearable device, at least one camera configured to be positioned toward an external environment, and at least one sensor configured to obtain information with respect to the external environment. The method may include providing, using the displays, a first portion of the virtual space, while the wearable device is located inside of a safety zone set with respect to a space of the external environment for safety of the user wearing the wearable device. The method may include, based on the wearable device being moved outside of the safety zone through a first boundary that is a portion of a boundary of the safety zone, ceasing to provide the virtual space using the displays, and providing, using the displays, a video with respect to the external environment being obtained using the at least one camera. The method may include, based on the wearable device being moved outside of the safety zone through a second boundary that is a portion of a boundary of the safety zone and different from the first boundary, identifying a second portion of the virtual space based on a location of the wearable device located outside of the safety zone. The method may include, based on identifying the second portion of the virtual space, providing, using the displays, a video with respect to the external environment and the second portion of the virtual space.

For example, providing the first portion of the virtual space may include detecting a geographic location of the wearable device using the at least one sensor and/or the at least one camera. Providing the first portion of the virtual space may include checking whether the wearable device is moved outside of the safety zone by comparing the safety zone and the geographic location.

For example, providing the first portion of the virtual space may include providing, using the displays, a first virtual object having a first color representing the first boundary, based on detecting the wearable device being moved toward the first boundary. Providing the first portion of the virtual space may include providing, using the displays, a second virtual object having a second color representing the second boundary, based on detecting the wearable device being moved toward the second boundary.

For example, providing the second portion of the virtual space may include providing, using the displays, a virtual object for checking whether to provide the second portion.

For example, providing the video and the second portion may include providing, using the displays, a combination of the video and the second portion by applying a designated transparency to at least one of the video or the second portion.

As described above, according to an embodiment, a wearable device may include displays configured to be positioned toward eyes of a user wearing the wearable device, at least one camera configured to be positioned toward an external environment, at least one sensor configured to obtain information with respect to the external environment, memory, comprising one or more storage mediums, storing instructions, and at least one processor comprising processing circuitry. The instructions, when executed by the at least one processor individually and/or collectively, may cause the wearable device to provide, using the displays, a first portion of a virtual space, while the wearable device is located inside of a safety zone set with respect to a space of the external environment for safety of the user wearing the wearable device. The instructions, when executed by the at least one processor individually and/or collectively, may cause the wearable device to, based on the wearable device being moved outside of the safety zone through a first boundary that is a portion of a boundary of the safety zone, cease to provide using the displays, the virtual space and provide, using the displays, a video with respect to the external environment being obtained using the at least one camera. The instructions, when executed by the at least one processor individually and/or collectively, may cause the wearable device to identify a second portion of the virtual space, based on a location of the wearable device located outside of the safety zone, based on the wearable device being moved outside of the safety zone through a second boundary that is a portion of a boundary of the safety zone and different from the first boundary. The instructions, when executed by the at least one processor individually and/or collectively, may cause the wearable device to provide, using the displays, the video with respect to the external environment and the second portion of the virtual space, based on identifying the second portion of the virtual space.

For example, the instructions, when executed by the at least one processor individually and/or collectively, may cause the wearable device to detect a geographic location of the wearable device using the at least one sensor and/or the at least one camera. The instructions, when executed by the at least one processor individually and/or collectively, may cause the wearable device to check whether the wearable device is moved to an outside of the safety zone by comparing the safety zone and the geographic location.

For example, the instructions, when executed by the at least one processor individually and/or collectively, may cause the wearable device to provide, using the displays, a first virtual object having a first color representing the first boundary, based on detecting the wearable device being moved toward the first boundary. The instructions, when executed by the at least one processor individually and/or collectively, may cause the wearable device to provide, using the displays, a second virtual object having a second color representing the second boundary, based on detecting the wearable device being moved toward the second boundary.

For example, the instructions, when executed by the at least one processor individually and/or collectively, may cause the wearable device to provide, using the displays, a virtual object for checking whether to provide the second portion.

For example, the instructions, when executed by the at least one processor individually and/or collectively, may cause the wearable device to provide, using the displays, a combination of the video and the second portion by applying a designated transparency to at least one of the video or the second portion.

As described above, in an embodiment, a non-transitory computer-readable storage medium storing instructions may be provided. The instructions may be executed by a wearable device with displays configured to be positioned toward eyes of a user, at least one camera configured to be positioned toward an external environment, and at least one sensor configured to obtain information with respect to the external environment. The instructions, when executed by the wearable device, may cause the wearable device to provide a virtual space, using the displays, while the wearable device is located inside of a safety zone set for safety of a user wearing the wearable device. The instructions, when executed by the wearable device, may cause the wearable device to display a virtual object to change at least one of a location or a direction of the virtual space with respect to the safety zone, based on identifying the wearable device being moved toward a boundary of the safety zone using the at least one camera and/or the at least one sensor. The instructions, when executed by the wearable device, may cause the wearable device to, in response to an input associated with the virtual object, change at least one of the location or the direction of the virtual space, and identify a portion of the virtual space based on a location and a direction of the wearable device in the virtual space, according to the change. The instructions, when executed by the wearable device, may cause the wearable device to provide, using the displays, the identified portion of the virtual space.

As described above, according to an embodiment, a wearable device (e.g., the wearable device 101 of FIG. 1) may include displays configured to be positioned toward eyes of a user wearing the wearable device, at least one camera (e.g., the camera 225 of FIG. 2) configured to be positioned toward an external environment, at least one sensor (e.g., the sensor 230 of FIG. 2) configured to obtain information with respect to the external environment, memory(e.g., the memory 215 of FIG. 2), comprising one or more storage mediums, storing instructions, and at least one processor (e.g., the processor 210 of FIG. 2) comprising processing circuitry. The instructions, when executed by the at least one processor individually and/or collectively, may cause the wearable device to provide, using the displays, a virtual space (e.g., the virtual space 920 of FIGS. 9A to 9C), while the wearable device is located inside of a safety zone (e.g., the safety zone 130 of FIG. 1 and the safety zone 910 of FIGS. 9A to 9C) set for safety of a user wearing the wearable device. The instructions, when executed by the at least one processor individually and/or collectively, may cause the wearable device to display a virtual object (e.g., the virtual object 150 of FIG. 1) for changing at least one of a location or a direction of the virtual space with respect to the safety zone, based on identifying the wearable device being moved toward a boundary of the safety zone using the at least one camera and/or the at least one sensor. The instructions, when executed by the at least one processor individually and/or collectively, may cause the wearable device to, in response to an input associated with the virtual object, change at least one of the location or the direction of the virtual space and identify a portion of the virtual space based on a location and a direction of the wearable device in the virtual space according to the change. The instructions, when executed by the at least one processor individually and/or collectively, may cause the wearable device to provide, using the displays, the identified portion of the virtual space.

As used herein, the term "if" is, optionally, construed to mean "when" or "upon" or "in response to determining" or "in response to detecting," depending on the context. Similarly, the phrase "if it is determined" or "if [a stated condition or event] is detected" is, optionally, construed to mean "upon determining" or "in response to determining" or "upon detecting [the stated condition or event]" or "in response to detecting [the stated condition or event]," depending on the context.

The device described above may be implemented as a hardware component, a software component, and/or a combination of a hardware component and a software component. For example, the devices and components described in the embodiments may be implemented by using one or more general purpose computers or special purpose computers, such as a processor, controller, arithmetic logic unit (ALU), digital signal processor, microcomputer, field programmable gate array (FPGA), programmable logic unit (PLU), microprocessor, or any other device capable of executing and responding to instructions. The processing device may perform an operating system (OS) and one or more software applications executed on the operating system. In addition, the processing device may access, store, manipulate, process, and generate data in response to the execution of the software. For convenience of understanding, there is a case that one processing device is described as being used, but a person who has ordinary knowledge in the relevant technical field may see that the processing device may include a plurality of processing elements and/or a plurality of types of processing elements. For example, the processing device may include a plurality of processors or one processor and one controller. In addition, another processing configuration, such as a parallel processor, is also possible.

The software may include a computer program, code, instruction, or a combination of one or more thereof, and may configure the processing device to operate as desired or may command the processing device independently or collectively. The software and/or data may be embodied in any type of machine, component, physical device, computer storage medium, or device, to be interpreted by the processing device or to provide commands or data to the processing device. The software may be distributed on network-connected computer systems and stored or executed in a distributed manner. The software and data may be stored in one or more computer-readable recording medium.

The method according to the embodiment may be implemented in the form of a program command that may be performed through various computer means and recorded on a computer-readable medium. In this case, the medium may continuously store a program executable by the computer or may temporarily store the program for execution or download. In addition, the medium may be various recording means or storage means in the form of a single or a combination of several hardware, but is not limited to a medium directly connected to a certain computer system, and may exist distributed on the network. Examples of media may include a magnetic medium such as a hard disk, floppy disk, and magnetic tape, optical recording medium such as a CD-ROM and DVD, magneto-optical medium, such as a floptical disk, and those configured to store program instructions, including ROM, RAM, flash memory, and the like. In addition, examples of other media may include recording media or storage media managed by app stores that distribute applications, sites that supply or distribute various software, servers, and the like.

Although the embodiments have been described above with reference to limited examples and drawings, various modifications and variations may be made from the above description by those skilled in the art. For example, even if the described technologies are performed in a different order from the described method, and/or the components of the described system, structure, device, circuit, and the like are coupled or combined in a different form from the described method, or replaced or substituted by other components or equivalents, appropriate a result may be achieved.

Therefore, other implementations, other embodiments, and those equivalent to the scope of the claims are in the scope of the claims described later.

## Claims

1. A wearable device comprising:
displays configured to be positioned toward eyes of a user wearing the wearable device;
at least one camera configured to be positioned toward an external environment;
at least one sensor configured to obtain information with respect to the external environment;
memory, comprising one or more storage mediums, storing instructions; and
at least one processor comprising processing circuitry,
wherein the instructions, when executed by the at least one processor individually and/or collectively, cause the wearable device to:
set a safety zone with respect to a space of the external environment for safety of the user wearing the wearable device;
provide a virtual space using the displays;
while the virtual space is provided beyond the safety zone at a first location of the wearable device within the safety zone, based on identifying the wearable device being moved outside of the safety zone, provide, using the displays, both the virtual space and a video with respect to the external environment being obtained using the at least one camera to highlight the external environment with respect to the virtual space; and
while the virtual space is provided at a second location of the wearable device within the safety zone, based on identifying the wearable device being moved outside of the safety zone, cease to provide the virtual space.

2. The wearable device of claim 1, wherein the instructions, when executed by the at least one processor individually and/or collectively, cause the wearable device to:
while providing the virtual space defined beyond the safety zone, based on identifying the wearable device being moved outside of the safety zone, display a virtual object to check whether to cease providing the virtual space.

3. The wearable device of claim 1 to claim 2, wherein the instructions, when executed by the at least one processor individually and/or collectively, cause the wearable device to:
detect a geographic location of the wearable device using the at least one sensor and/or the at least one camera;
check whether the wearable device is moved beyond the safety zone comparing the safety zone and the geographic location.

4. The wearable device of claim 1 to claim 3, wherein the instructions, when executed by the at least one processor individually and/or collectively, cause the wearable device to:
while providing the virtual space defined inside of the safety zone, based on identifying the wearable device being moved outside of the safety zone, provide using the displays the video being obtained using the at least one camera.

5. The wearable device of claim 1 to claim 4, wherein the instructions, when executed by the at least one processor individually and/or collectively, cause the wearable device to:
based on identifying the wearable device being moved toward a portion of a boundary of the safety zone within the safety zone, provide using the displays a virtual plane representing the portion to which the wearable device approaches.

6. The wearable device of claim 5, wherein the instructions, when executed by the at least one processor individually and/or collectively, cause the wearable device to:
provide using the displays the virtual plane having a color determined using information indicating whether the user is able to move outside of the safety zone through the portion.

7. The wearable device of claim 1 to claim 6, wherein the instructions, when executed by the at least one processor individually and/or collectively, cause the wearable device to:
while providing the virtual space defined beyond the safety zone, based on identifying the wearable device being moved toward a boundary of the safety zone adjacent to an external object, provide using the displays a virtual object to change mapping between the safety zone and the virtual space; and
in response to an input associated with the virtual object, change the mapping such that a portion of the virtual space defined beyond the safety zone is moved inside of the safety zone.

8. The wearable device of claim 7, wherein the instructions, when executed by the at least one processor individually and/or collectively, cause the wearable device to:
after changing the mapping in response to the input, display using the displays a virtual object indicating a direction of the portion of the virtual space that is defined beyond the boundary before changing the mapping.

9. The wearable device of claim 1, wherein the instructions, when executed by the at least one processor individually and/or collectively, cause the wearable device to:
to highlight the external environment with respect to the virtual space:
increase a transparency of the virtual space; or
increase a size of an area within the display where the video is displayed.

10. The wearable device of claim 9, wherein the instructions, when executed by the at least one processor individually and/or collectively, cause the wearable device to:
while providing an area within the display where the video is displayed, to highlight the external environment with respect to the virtual space:
increase a size of the area according to a speed indicated by an attribute of at least portion of the safety zone adjacent to the wearable device.

11. A non-transitory computer readable storage medium storing instructions, wherein the instructions, when executed by a wearable device including displays configured to be positioned toward eyes of a user wearing the wearable device, at least one camera configured to be positioned toward an external environment, and at least one sensor configured to obtain information with respect to the external environment, cause the wearable device to:
set a safety zone with respect to a space of the external environment for safety of the user wearing the wearable device;
provide a virtual space using the displays;
while the virtual space is provided beyond the safety zone at a first location of the wearable device within the safety zone, based on identifying the wearable device being moved outside of the safety zone, provide, using the displays, both the virtual space and a video with respect to the external environment being obtained using the at least one camera by increasing a transparency of the virtual space; and
while the virtual space is provided at a second location of the wearable device within the safety zone, based on identifying the wearable device being moved outside of the safety zone, cease to provide the virtual space.

12. The non-transitory computer readable storage medium of claim 11, wherein the instructions, when executed by the wearable device, cause the wearable device to:
while providing the virtual space defined beyond the safety zone, based on identifying the wearable device being moved outside of the safety zone, display a virtual object to check whether to cease providing the virtual space.

13. The non-transitory computer readable storage medium of claim 11 to claim 12, wherein the instructions, when executed by the wearable device, cause the wearable device to:
detect a geographic location of the wearable device using the at least one sensor and/or the at least one camera;
check whether the wearable device is moved beyond the safety zone comparing the safety zone and the geographic location.

14. The non-transitory computer readable storage medium of claim 11 to claim 13, wherein the instructions, when executed by the wearable device, cause the wearable device to:
while providing the virtual space defined inside of the safety zone, based on identifying the wearable device being moved outside of the safety zone, provide using the displays the video being obtained using the at least one camera.

15. The non-transitory computer readable storage medium of claim 11 to claim 14, wherein the instructions, when executed by the wearable device, cause the wearable device to:
based on identifying the wearable device being moved toward a portion of a boundary of the safety zone within the safety zone, provide using the displays a virtual plane representing the portion to which the wearable device approaches.
